(19) Europäisches Patentamt / European Patent Office / Office européen des brevets

(11) **EP 3 721 656 B1**

(12) **FASCICULE DE BREVET EUROPEEN**

(45) Date de publication et mention de la délivrance du brevet:
**23.08.2023 Bulletin 2023/34**

(21) Numéro de dépôt: **18808392.7**

(22) Date de dépôt: **04.12.2018**

(51) Classification Internationale des Brevets (IPC):
**H04W 84/18** (2009.01)    **H04W 40/24** (2009.01)

(52) Classification Coopérative des Brevets (CPC):
**H04W 84/18; H04W 40/24**

(86) Numéro de dépôt international:
**PCT/EP2018/083502**

(87) Numéro de publication internationale:
**WO 2019/110594 (13.06.2019 Gazette 2019/24)**

(54) **PROCÉDÉ ET ENSEMBLE PERMETTANT À DES TERMINAUX UTILISATEURS FINAUX D'ÉCHANGER PAR L'INTERMÉDIAIRE D'UN RÉSEAU MULTI-SAUTS SANS FIL DE PROXIMITÉ DE COMMUNICATION À ARCHITECTURE DYNAMIQUE**

VERFAHREN UND ANORDNUNG ZUR ERMÖGLICHUNG VON ENDBENUTZERENDGERÄTEN ZUM AUSTAUSCH ÜBER EIN MULTIHOP-DRAHTLOSKOMMUNIKATIONSNETZWERK MIT DYNAMISCHER ARCHITEKTUR

METHOD AND ASSEMBLY ALLOWING END-USER TERMINALS TO EXCHANGE OVER A WIRELESS MULTI-HOP COMMUNICATION PROXIMITY NETWORK WITH DYNAMIC ARCHITECTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2017 FR 1761613**

(43) Date de publication de la demande:
**14.10.2020 Bulletin 2020/42**

(73) Titulaires:
• **Ecole Nationale des Ponts et Chaussées**
  **77420 Champs-sur-Marne (FR)**
• **Université Gustave Eiffel**
  **77420 Champs-sur-Marne (FR)**
• **CENTRE NATIONAL DE LA RECHERCHE SCIENTIFIQUE (C.N.R.S.)**
  **75016 Paris (FR)**

(72) Inventeurs:
• **RACHEDI, Abderrezak**
  **77177 Brou Sur Chantereine (FR)**
• **BADIS, Hakim**
  **77100 Meaux (FR)**

(74) Mandataire: **Regimbeau**
  **20, rue de Chazelles**
  **75847 Paris Cedex 17 (FR)**

(56) Documents cités:
**FR-A1- 3 017 017    US-A1- 2017 311 249**

• **FABRICE THEOLEYRE ET AL: "STRUCTURE VIRTUELLE POUR UNE AUTO-ORGANISATION DANS LES RÉSEAUX AD HOC ET HYBRIDES", ANNALES DES TELECOMMUNICATIONS - ANNALS OF TELECOMMUNICATIONS, GET LAVOISIER, PARIS, FR, vol. 62, no. 1/2, 1 janvier 2007 (2007-01-01), pages 240-268, XP001505051, ISSN: 0003-4347 cité dans la demande**

## Description

La présente invention est relative à un procédé et à un ensemble permettant à des terminaux utilisateurs finaux d'échanger par l'intermédiaire d'un réseau multi-sauts sans fil de proximité de communication à architecture dynamique dont les noeuds sont des terminaux utilisateurs statiques ou à faible mobilité relative.

Elles trouvent avantageusement application pour des échanges dans le cadre de services collaboratifs, par exemple, mais non limitativement, dans le domaine routier (aide à la navigation, info trafic, etc.).

## ART ANTERIEUR ET DOMAINE TECHNIQUE GENERAL

Classiquement, les applications de type temps réel, telles que par exemple à titre illustratif mais non limitatif collaboratives, sont hébergées dans des ressources à distance (le « Cloud » (terminologie anglo-saxonne utilisée dans ce qui suit) - dédié ou public). Ceci permet d'offrir un accès fluide et sans faille à des ressources informatiques externes (capacité de stockage, puissance de traitement, etc.).

Ces applications de type temps réel exigent un temps de réponse limité pour éviter les retards dans la réception et l'affichage de données (position, vitesse, etc.) en temps réel. Ce temps de réponse comprend deux parties : le temps pour le Cloud de recevoir et traiter l'information et le temps pour la donnée de parcourir le réseau entre l'utilisateur et le Cloud, et ceci aller et retour.

Alors qu'il existe des moyens pour optimiser le temps de traitement dans le Cloud, le temps d'aller-retour quant à lui reste immaîtrisable car il dépend de plusieurs paramètres : la distance entre le Cloud et l'utilisateur final, le risque de congestions de données dans les réseaux de transport, la couverture et la qualité des réseaux d'accès radio que ce soient cellulaires (3G/3G+/4G/5G) ou WiFi (IEEE 802.11 n/ac/p) auxquels l'utilisateur est connecté.

L'invention propose un procédé et un système de communication qui s'inscrivent dans une stratégie de réduction du temps d'aller-retour pour l'accès aux services collaboratifs, ainsi que dans une stratégie de réduction de coût d'architecture pour le réseau.

L'invention décrite dans la demande de brevet FR3017017 concerne un procédé de communication entre un terminal utilisateur alimenté par une batterie et une station de base permettant une optimisation de la gestion de la batterie dudit terminal utilisateur.

On notera en outre que dans les solutions actuelles, il est nécessaire pour que les utilisateurs bénéficient de l'accès aux services dans le Cloud qu'ils disposent d'une connexion internet, notamment via les réseaux WiFi, 3G/4G/5G, etc. Une telle connexion peut toutefois en pas être disponible, notamment si l'utilisateur se retrouve en dehors des zones de couverture radio ou dans une zone sans nouvelle disponibilité, par exemple lorsque la borne d'accès à proximité a atteint son nombre maximum de connexions.

Egalement, l'utilisateur peut être privé de l'accès au service du fait d'une mauvaise qualité de liaison radio causée par des interférences, ou encore lorsque son forfait de communication cellulaire est épuisé.

Par ailleurs, le coût lié à la consommation des données en passant par des réseaux d'accès payants peut également être un frein.

## PRESENTATION GENERALE DE L'INVENTION

Un but de l'invention est de rapprocher l'utilisateur final de l'information et d'utiliser des ressources locales (« Fog » selon la terminologie anglo-saxonne utilisée dans ce qui suit) en complément des ressources à distance (« Cloud Computing ») pour réduire le temps d'aller-retour et amortir les retards dans la réception des données.

Un autre but de l'invention est de permettre aux clients d'interagir avec l'application proposée ou les applications existantes en sollicitant le moins possible les réseaux d'accès traditionnels (3G/3G+/4G/5G).

Un autre but encore est de permettre de s'appuyer sur une communauté collaborative et participative d'utilisateurs (conducteurs, piétons, cyclistes, commerçants, collectivité locale, ...) pour enrichir la base de données, affiner les calculs, et répondre le caractère social.

En particulier, selon un aspect, l'invention propose un procédé de communication entre des terminaux aptes à mettre en oeuvre entre eux des communications sans fil de proximité lorsqu'ils sont à des distances le permettant, ainsi qu'à communiquer individuellement avec des ressources à distance.

Dans ce procédé, on utilise les terminaux qui sont statiques ou à faible mobilité relative pour qu'ils forment ensemble les noeuds d'un réseau local de communication à architecture dynamique. Les différents terminaux situés à une distance permettant l'établissement d'une communication sans fil de proximité avec au moins l'un des terminaux utilisateurs statiques ou à faible mobilité relative, peuvent alors échanger entre eux via ce réseau.

Ainsi, plus particulièrement, l'invention propose un procédé de communication entre des terminaux utilisateurs finaux et des terminaux utilisateurs statiques ou à faible mobilité relative les uns par rapport aux autres, ces terminaux étant adaptés pour mettre en oeuvre entre eux, par une première liaison de communication qui est une liaison de communication sans fil, des communications sans fil de proximité lorsqu'ils sont à des distances le permettant, ainsi qu'à communiquer individuellement, par une deuxième liaison de communication qui est une liaison de communication cellulaire, avec au moins un serveur des ressources à distance qui est un serveur de contrôle accessible par un réseau de type « Cloud Computing ».

Dans ce procédé,

- les terminaux utilisateurs statiques ou à faible mobilité relative forment ensemble les noeuds d'un réseau de communication de proximité multi-sauts à architecture dynamique et échangent entre eux dans ce réseau par leur première liaison de communication sans fil,
- ces terminaux utilisateurs statiques ou à faible mobilité relative du réseau de proximité multi-sauts échangeant avec au moins le serveur de contrôle qui supervise l'architecture dudit réseau de proximité multi-sauts,
- et les autres terminaux utilisateurs étant les terminaux utilisateurs finaux et communiquant avec au moins l'un des terminaux utilisateurs statiques ou à faible mobilité relative du réseau par la première liaison de communication sans fil.

Ce procédé qui comprend les étapes suivantes :

- chaque terminal transmet par la deuxième liaison de communication cellulaire au(x) serveur(s) de contrôle, des informations de contrôle telles qu'une information d'identification et de positionnement, ainsi qu'une information relative à au moins un paramètre technique,
- en fonction des informations de contrôle reçues, le serveur de contrôle :

  • sélectionne les terminaux statiques ou à faible mobilité relative parmi l'ensemble des terminaux, les autres terminaux étant dits terminaux finaux,
  • détermine un graphe dont les noeuds sont les terminaux statiques ou à faible mobilité relative, deux noeuds étant reliés par une arête si la distance entre eux est inférieure à la distance leur permettant d'échanger directement entre eux par le réseau de proximité multi-sauts dynamique,
  • détermine sur ce graphe de noeuds un sous-graphe de noeuds dominants, la détermination de ce sous-graphe étant optimisée pour minimiser le nombre de noeuds et respecter une contrainte donnée sur au moins un paramètre technique donné,
  • sélectionne dans le sous-graphe des noeuds dominants au moins un noeud passerelle apte à établir une communication avec le réseau de type Cloud Computing par leur deuxième liaison de communication cellulaire,
  • sélectionne les noeuds du graphe qui n'appartiennent pas aux noeuds du sous-graphe, comme noeuds ayant uniquement la fonction d'accès/relais au réseau de proximité multi-sauts dynamique pour les terminaux utilisateurs finaux,
  • transmet par la deuxième liaison de communication cellulaire uniquement individuellement à chacun des différents terminaux statiques ou à faible mobilité relative son statut hiérarchique: de noeud passerelle, de noeud dominant ou de simple noeud d'accès/relais qui leur est attribué, pour constituer le réseau de proximité multi-sauts dynamique de communication pendant une durée fonction de la configuration en cours des terminaux statiques ou à faible mobilité relative.

Avantageusement, une fois le réseau de proximité multi-sauts dynamique de communication constitué, lorsqu'un terminal utilisateur final ou un terminal utilisateur statique ou à faible mobilité relative émet une requête, ce terminal émet :

  • dans un premier temps par sa première liaison de communication sans fil au réseau de proximité multi-sauts de communication, les noeuds dominants étant aptes à gérer ladite requête pour répondre au terminal qui les interrogent,
  • dans un second temps, sans réponse satisfaisante des noeuds dominants, au serveur de contrôle,

  soit directement par sa deuxième liaison de communication cellulaire,

  soit par l'intermédiaire d'un autre terminal qui est un noeud passerelle, en communication avec le serveur de contrôle par la deuxième liaison de communication cellulaire de cet autre terminal.

Le serveur de contrôle peut subdiviser le graphe en plusieurs zones géographiques d'intérêt pour lesquelles un ou plusieurs paramètres techniques sont définis, et calcule le réseau de proximité multi-sauts dynamique de communication qui présente des terminaux statiques ou à faible mobilité relative dans ces zones géographiques d'intérêt.

Le serveur de contrôle peut mettre en oeuvre son traitement sur plusieurs paramètres techniques et définit un ordre de priorité de ces paramètres techniques. Notamment, le serveur de contrôle peut définir un ordre de priorité dans chaque zone géographique d'intérêt.

Le ou les paramètres techniques transmis par un terminal au serveur de contrôle peuvent être choisis parmi la liste suivante :

- degré de connectivité avec les autres terminaux (nombre des noeuds voisin directs) ;
- couverture radio (Portée radio) ;
- qualité de connexion ; (1) La qualité de connexion entre les terminaux et le réseau d'opérateur et 2) La qualité de connexion entre les terminaux et le réseau de proximité) ;
- capacité mémoire pour le stockage des données ;
- niveau d'énergie de batterie disponible ;
- vitesse du terminal (vitesse du terminal par-rapport au sol (vitesse « classique ») et vitesse relative par-rapport à ses voisins) ;
- qualité de la connexion du terminal au réseau de proximité multi-sauts dynamique ;
- e-reputation ou autre information de la personne titulaire du terminal caractéristique des réseaux sociaux.

Egalement, la contrainte technique peut être définie par :

- un seuil, notamment lorsque le paramètre technique est la couverture radio ; ou

- deux à quatre classes d'intervalles pour un paramètre technique, notamment lorsque le paramètre technique est la capacité mémoire pour le stockage des données ou le niveau d'énergie de batterie disponible.

Notamment, la contrainte technique peut être définie pour un seuil de couverture radio dans une zone d'intérêt. Notamment alors :

- on prend deux paramètres techniques : le degré de connectivité et la couverture radio qui a un ordre de priorité inférieur à celui du degré de connectivité ;

- on calcule le chevauchement de la couverture radio des noeuds avec la ou les zones géographiques d'intérêt, on retient les noeuds ayant la plus grande couverture radio dans la ou les zones géographiques d'intérêt comme noeuds dominants, et on réinitialise la surface des zones d'intérêt ZI à couvrir hors couvertures radio des noeuds dominants déterminés, pour trouver d'autres noeuds dominants supplémentaires si nécessaire pour couvrir la zone d'intérêt ZI ; une zone géographique d'intérêt (ZI) est une zone définie par l'application et qui peut avoir plusieurs formes (cercle, carré, polygone, etc.) avec une taille fixe ou différente (la taille peut être exprimée en fonction de la portée radio).

Des données peuvent être hébergées dans les noeuds dominants du réseau de proximité multi-sauts dynamique de communication, et proviennent du réseau de type Cloud Computing, du serveur de contrôle et/ou des terminaux, les noeuds dominants pouvant communiquer et partager entre eux les données.

La portée en extérieure des communications pour la première liaison de communication sans fil est par exemple inférieure à 300 mètres, et pour la deuxième liaison de communication cellulaire supérieure à 400 mètres.

Les terminaux sont par exemple configurés avec des interfaces de communication Wifi et/ou Bluetooth et/ou Zigbee et/ou V2X et/ou C-V2X, DSRC pour leur première liaison sans fil, ainsi qu'avec des interfaces de communication 2G et/ou 3G et/ou 4G et/ou LTE et/ou 5G pour leur deuxième liaison de communication cellulaire, le serveur de contrôle étant conforme au modèle SDN, chaque terminal présentant une unité de contrôle correspondante.

Lorsque le serveur de contrôle détecte l'arrivée et/ou le départ de terminaux statiques ou à faible mobilité relative, il peut relancer la détermination des statuts des noeuds de réseau constitués par les terminaux statiques ou à faible mobilité relative.

Pour la détermination du sous-graphe qui comporte une ou des zones géographiques d'intérêts (ZI), le serveur de contrôle peut mettre en oeuvre 4 étapes successives :

- dans une première étape, former un Maximum Independent Set (MIS) dans le graphe, et de façon indépendante dans la ou les zones géographiques d'intérêts du sous graphe si le graphe comporte une ou plusieurs zones géographiques d'intérêts ;

- dans une deuxième étape, former un Minimum Dominating Set (mDS) en :

- (i) calculant les scores du ou des paramètres techniques pour chaque noeud du graphe, pour obtenir des premiers noeuds dominants,
ces scores satisfaisant la contrainte sur le ou les paramètres techniques pour les noeuds dominants, (le score est une valeur d'un paramètre technique dans une métrique donnée. Notamment, dans le cas de plusieurs paramètres techniques, cette métrique est une métrique mixte, la valeur (nommée score) étant fonction des valeurs des différents paramètres techniques ; ces valeurs doivent à cet effet subir une transformation pour être représentées dans le même domaine (par exemple dans l'intervalle [0-1]). De plus, ces paramètres techniques n'ont pas le même degré d'importance/priorité. Par conséquent, chaque paramètre technique possède un coefficient de pondération qui exprime cette importance ou différence par rapport aux autres) ; une fois que ces noeuds noirs sont fixés leur score n'a plus d'importance, on passe à la détermination d'autres noeuds noirs avec le calcul du score de ces derniers.

- (ii) mettant à jour les scores du ou des paramètres techniques ;

- (iii) déterminant d'autres seconds noeuds dominants en plus des premiers noeuds dominants, en relançant la phase (i) et la phase (ii) jusqu'à ce que la contrainte ne soit pas satisfaite pour les noeuds restants ;

- dans une troisième étape, mise à jour des noeuds restants en noeuds dominés sur le graphe entier pour lequel toutes les zones d'intérêt ont été réunies ; et mise à jour des scores du ou des paramètres techniques, et détermination d'autres noeuds dominants à partir des noeuds dominés ;

- dans une quatrième étape, interconnecter les noeuds dominants entre eux pour former un Minimum Connected Dominating Set (mCDS).

Le serveur de contrôle peut éliminer préalablement dans la première étape les noeuds qui ne respectent pas la classe d'intervalle souhaitée pour la contrainte technique donnée sur le paramètre technique donné, les classes d'intervalle se déterminant par calcul de score du paramètre technique. Notamment, le serveur de contrôle transforme des noeuds dominés en noeuds dominants dans la troisième phase après la réunion de toutes les zones d'intérêt pour former le graphe en entier.

Dans une mise en oeuvre possible du procédé proposé notamment :

- un premier paramètre technique peut être prioritaire par rapport à au moins un deuxième paramètre technique ;

et :

- dans la deuxième étape, on attribue au noeud dont le score respecte la classe d'intervalle souhaitée (ou un seuil donné) pour le premier paramètre technique, le statut de noeud dominant

et en cas d'égalité avec un ou plusieurs noeuds dont le score respecte la classe d'intervalle souhaitée (ou le seuil), le noeud qui respecte la classe d'intervalle souhaitée pour un deuxième paramètre technique (ou qui a le plus grand score), et en cas de nouvelle égalité avec un ou plusieurs noeuds dont le score respecte la classe d'intervalle souhaitée du deuxième paramètre technique, le noeud qui respecte aussi la classe d'intervalle souhaitée pour un troisième paramètre technique qui serait moins prioritaire que le deuxième paramètre technique, ou l'un de ces noeuds s'il n'y a pas de troisième paramètre technique,

- et ensuite dans la deuxième étape, on attribue aux voisins du noeud qualifié de noeud dominant et qui ne sont pas des noeuds dominants, le statut de noeuds intermédiaires.

Le procédé trouve notamment application dans le cas où les terminaux sont des véhicules intégrant des équipements de systèmes de communication pouvant être embarqués ou non embarqués, des téléphones portables, des ordinateurs.

Par terminaux à faible mobilité relative, on peut par exemple entendre des terminaux qui présentent des vitesses entre eux inférieures ou égales à une vitesse piéton /restent dans la zone d'intérêt/ et restent toujours en connexion par le réseau de proximité multi-sauts dynamique avec les mêmes terminaux statiques ou à faible mobilité relative voisins du Fog, tels que des véhicules à l'arrêt.

L'invention concerne en outre un ensemble comprenant des terminaux utilisateurs finaux et des terminaux utilisateurs statiques ou à faible mobilité relative, ces terminaux étant adaptés pour mettre en oeuvre entre eux des communications sans fil de proximité lorsqu'ils sont à des distances le permettant par une première liaison de communication sans fil, ainsi qu'à communiquer individuellement avec des ressources à distance par une deuxième liaison de communication cellulaire,

dans les terminaux utilisateurs statiques ou à faible mobilité relative forment ensemble les noeuds d'un réseau de proximité multi-sauts de communication à architecture dynamique,

les autres terminaux dits terminaux utilisateurs finaux communiquant avec au moins l'un des terminaux utilisateurs statiques ou à faible mobilité relative du réseau par une première liaison de communication sans fil,

l'ensemble comportant également au moins un serveur à distance de contrôle de l'architecture dudit réseau, qui est lui-même relié à un réseau de type Cloud Computing, et avec lequel les terminaux utilisateurs statiques ou à faible mobilité relative du réseau de proximité multi-sauts échangent,

les terminaux utilisateurs finaux communiquent au serveur de contrôle uniquement leurs informations de contrôle par une deuxième liaison de communication cellulaire, et communiquent au réseau de proximité multi-sauts dynamique de communication uniquement par leur première liaison de communication sans fil,

les terminaux utilisateurs statiques ou à faible mobilité relative étant fonctionnalisés comme suit :

- des terminaux statiques ou à faible mobilité relative dits noeuds dominants répondent aux requêtes des terminaux utilisateurs finaux et hébergent des données qui proviennent du réseau de type Cloud Computing, du serveur de contrôle et/ou des terminaux,

une partie seulement de ces terminaux statiques ou à faible mobilité relative étant des noeuds dominants passerelles qui communiquent, par la première liaison de communication sans fil et/ou la deuxième liaison de communication cellulaire, au serveur de contrôle ;

- des terminaux statiques ou à faible mobilité relative dits noeuds d'accès/ relais au réseau de proximité multi-sauts.

Les terminaux sont par exemple des véhicules, des téléphones portables, des ordinateurs. Des terminaux statiques ou à faible mobilité relative sont des véhicules à l'arrêt.

## PRESENTATION DES FIGURES

- les figure 1a et 1b illustrent l'architecture générale d'un système de communication conforme à un mode de réalisation possible
- les figures 2a et 2b illustrent les notions de CDS et MIS ;
- les figures 3a à 3c illustrent la phase 1 d'un exemple de mise en oeuvre d'un algorithme conforme à l'invention (calcul du MIS) ;
- les figures 4a à 4d illustrent la phase 2 du même algorithme (calcul du mDS) ;
- la figure 5 illustre un exemple de calcul de scores pour une zone d'intérêt et une contrainte de couverture radio ;
- les figures 6a, 6b et 7a à 7c illustrent les phases 3a et 3b du même algorithme ;
- les figures 8a, 8b illustrent une autre variante de mise en oeuvre de ces étapes ;
- les figures 9a, 9b et 10a, 10b illustrent la quatrième phase du même algorithme ;
- les figures 11 à 13a-13g illustrent une autre mise en oeuvre avec le même algorithme ;
- les figures 14a, 14b et 14c donnent des résultats de dimensions de réseaux Fog obtenus en fonction du nombre de noeuds de départ (figure 14a), en fonction des dimensions de zones d'intérêt à couvrir (figure 14b) ou encore en fonction du nombre de zones d'intérêt à couvrir (figure 14c).

## DESCRIPTION D'UN OU PLUSIEURS MODES DE MISE EN ŒUVRE DE L'INVENTION

### Architecture générale

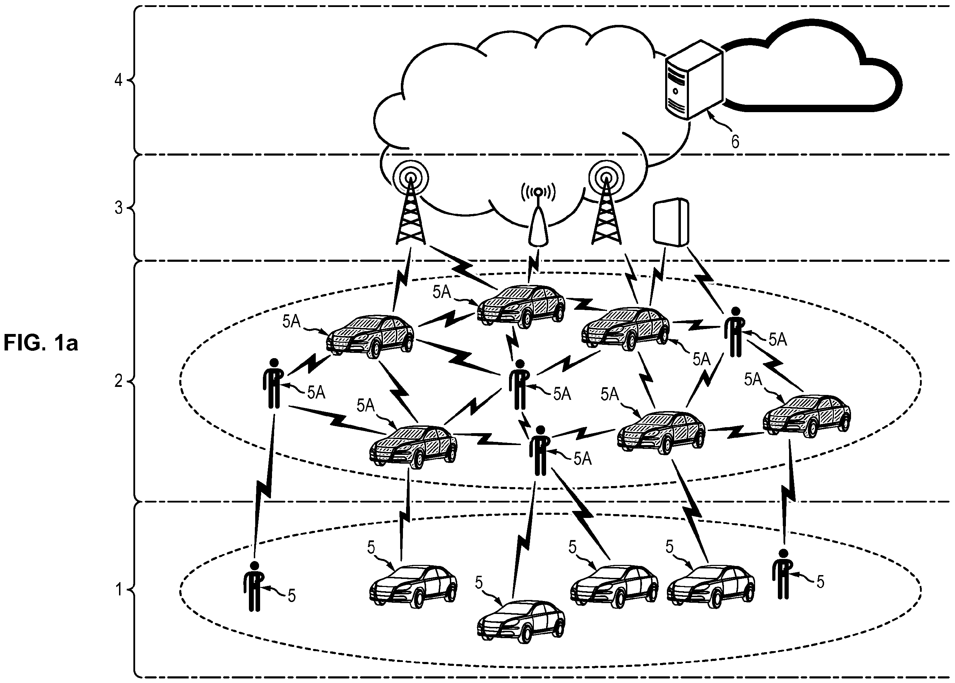

On a représenté sur la figure 1a l'architecture générale d'un système de communication conforme à un mode de réalisation possible.

Cette architecture générale se compose de quatre couches indépendantes :

- une couche 1 dite « utilisateur final »,

- une couche 2 formant les noeuds du réseau virtuel de proximité multi-sauts à architecture dynamique,
- une couche d'accès 3 comportant des moyens classiques d'un réseau de communication, par exemple tel qu'un réseau cellulaire ou un réseau WiFi,
- une couche 4 Cloud dans laquelle se situe un contrôleur 6.

Couche « utilisateur final »

La couche 1 « utilisateur final » est constituée par des terminaux comportant des moyens de communication 5 (téléphones portables, ordinateurs, tableaux de bord connectés d'un véhicule ou tout autre moyen de communication adapté).

Ces terminaux de communication 5 comportent notamment trois interfaces :

- l'une pour la communication des terminaux entre eux lorsqu'ils sont à proximité (portée inférieure ou égale à 500 mètres) (par exemple une interface WiFi (IEEE 802.11n/ac/p) et/ou Bluetooth et/ou Zigbee et/ou V2X et/ou C-V2X et/ou DSRC, etc...),
- une autre pour la communication avec des ressources à distance (interface cellulaire (3G/3G+/4G/LTE/5G) par exemple),
- une interface de géolocalisation (positionnement par satellite par exemple).

Les utilisateurs ont préalablement téléchargé sur ces terminaux 5 l'application correspondant au service d'informations partagées auquel ils souhaitent avoir accès.

Cette application est par exemple une application de navigation et d'info trafic communautaire.

D'autres types de services utilisant un accès à des données partagées sont également possibles. Notamment, le service peut prévoir, en complément ou indépendamment de l'application de navigation et d'info trafic, des services de partage de musique, et plus généralement de partage de données diverses : informations sur des places de parking disponibles, promotions dans des magasins donnés, données IdO (Internet des Objets), etc....

En installant l'application et après une phase d'enregistrement, l'utilisateur devient un membre de la communauté. Il peut alors bénéficier de services primitifs de l'application, à savoir par exemple la navigation et l'état du trafic. D'autres services peuvent lui être progressivement rendus accessibles selon sa contribution dans l'infrastructure réseau et dans la communauté.

Réseau virtuel de proximité multi-sauts à architecture dynamique

L'application téléchargée sur les terminaux 5 détermine sur ceux-ci, en interrogeant l'interface de localisation, s'ils sont en mouvement ou s'ils sont au contraire statiques ou en situation de faible mobilité relative.

Ces terminaux statiques ou à faible mobilité relative (véhicules à l'arrêt par exemple) - référencés par 5A sur la figure 1a - sont utilisés pour constituer le réseau virtuel et former une infrastructure réseau temporaire et opportuniste.

Lorsqu'il est activé par l'application et que celle-ci détecte qu'il s'agit d'un terminal statique ou à faible mobilité relative, un tel terminal 5A détecte dans un premier temps, dans la communauté, ses voisins qui sont également statiques ou à faible mobilité relative en utilisant le protocole "Bonjour" sur l'interface WiFi.

Il envoie ensuite un message au contrôleur 6 de la couche 4, via l'interface cellulaire ou WiFi, lui indiquant sa position de géolocalisation, ainsi que différents paramètres techniques, par exemple : qualité de connexion WiFi et cellulaire, capacité mémoire pour le stockage des données, liste de ses voisins, degré de connectivité avec les autres terminaux, niveau d'énergie de batterie disponible, vitesse du terminal, qualité de la connexion du terminal au réseau de proximité multi-sauts dynamique (lorsque celui est créé), e-reputation ou autre information de la personne titulaire du terminal caractéristique des réseaux sociaux, etc...

Le contrôleur 6, en recevant les messages de tous les utilisateurs à faible mobilité relative, construit une topologie maillée d'utilisateurs.

Les noeuds de ce maillage sont les terminaux mobiles 5A.

Deux noeuds 5A sont reliés par une arête si la distance entre eux est inférieure au rayon de la couverture leur permettant d'échanger directement entre eux,

Sur cette topologie, le contrôleur 6 exécute l'algorithme qui va être décrit ci-après pour déterminer le rôle de chaque utilisateur.

Ainsi, parmi les terminaux 5A :

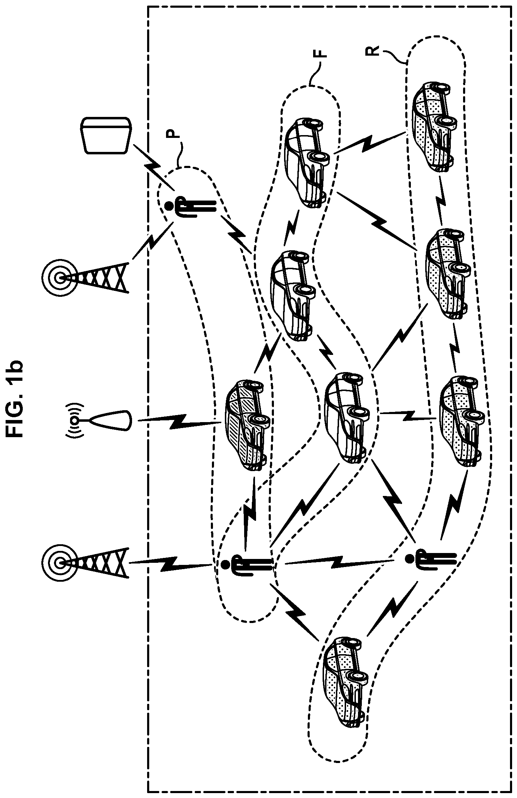

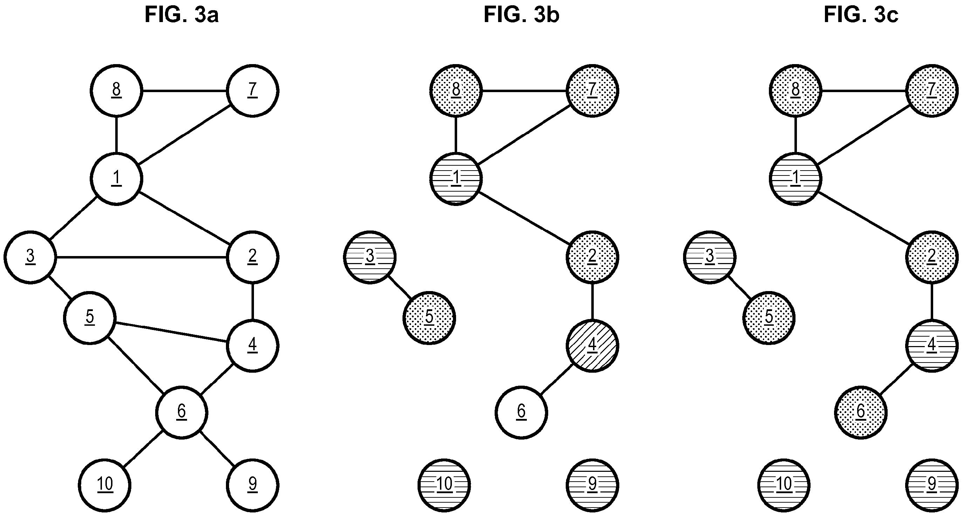

- certains (référencés par R sur la figure 1b) vont jouer le rôle de relais et forment le réseau d'accès WiFi au Fog,
- d'autres (référencés par F sur la figure 1b) vont jouer le rôle de noeud du réseau de ressources locales (réseau Fog),
- d'autres encore vont jouer le rôle de passerelle (« gateway » P sur la figure 1b) assurant la connexion de Fog aux réseaux d'accès traditionnel (cellulaire, borne WiFi publique, Box d'un utilisateur, ...) pour atteindre le Cloud. La figure 3 montre un exemple d'une telle sélection.

Les noeuds F du réseau Fog sont sélectionnés d'une manière intelligente en nombre minimal mais suffisant pour réduire les interférences WiFi entre noeuds du réseau, offrir la meilleure connexion en termes de débit aux utilisateurs relais, offrir un volume de stockage important, assurer la tolérance aux pannes et à la mobilité.

Il faut noter que ce problème est un problème d'optimisation combinatoire NP-Complet. L'algorithme permet de trouver des solutions presque optimales en un temps de calcul acceptable quasi-linéaire.

Pour atteindre cet objectif, l'algorithme modélise le problème sous la forme de la recherche d'un ensemble dominant optimal connexe.

Les noeuds dominants représentent les noeuds du Fog, mais ils peuvent aussi être à la fois des relais R et/ou des passerelles P.

Les noeuds dominés représentent les relais R et/ou des passerelles P.

Un autre élément très important dans l'algorithme est qu'il veille aussi sur la présence (lorsque cela est possible) de noeuds du Fog à proximité des centres d'intérêt, que ce soient permanents comme les intersections, les feux de circulations, carrefours routiers, etc., ou temporaires comme les salles de concert, les lieux d'accueils pour événements sportifs, ...

Ceci permet aux utilisateurs d'accéder et remonter rapidement des informations dans des zones sensibles et à forte densité sans congestionner le reste du Fog.

Les utilisateurs passerelles P quant à eux assurent la liaison entre les noeuds F du réseau Fog et le Cloud. En effet, lorsque le réseau Fog ne possède pas les données réclamées par les clients, il interroge le Cloud via des utilisateurs possédants une bonne connexion Internet par les réseaux classiques (3G/3G+/4G/5G, WiFi, etc...).

Les utilisateurs P chargés de cette mission d'intermédiaire entre le Fog et le Cloud sont désignés par l'algorithme en fonction de la qualité de leurs liaisons à Internet. Seules les meilleures liaisons sont retenues.

Couche 3 - Moyens de communication classiques

La couche 3 est constituée par les éléments classiques de technologies sans fil d'accès à Internet (technologie cellulaire ou WIFI).

Un utilisateur peut se connecter via les réseaux cellulaires 3G/3G+/4G/5G ou par une connexion WiFi derrière une borne publique, privée ou communautaire. Etant donné que le WiFi souffre de problèmes de mobilité, la faible mobilité relative des utilisateurs du réseau virtuel, y compris les gateways, favorise les connexions WiFi.

Couche 4 - Cloud et contrôleur 6

Le contrôleur 6 est le noyau de l'architecture. Il agit en tant que coordinateur des différents équipements utilisateurs et permet la programmation des opérations réseau.

Le contrôleur 6 héberge à cet effet un serveur avec la capacité de personnaliser les différents paramètres du sous-ensemble de terminaux formant la colonne vertébrale du virtuel tel que défini par l'algorithme de formation, puis sélectionner les noeuds relayés. Il est accessible via un réseau dans le nuage informatique (ou « Cloud Computing » dans le présent texte). L'agrégation des données et le processus de stockage font partie du nuage informatique avec possibilité de distribuer une partie de ces services sur les noeuds F du réseau Fog virtuel.

Ces opérations sont mises en services via la technologie SDN (networking logiciel) qui permet de configurer à la volée les équipements des utilisateurs de manière transparente.

Lors de l'installation de l'application, des autorisations sont demandées par le serveur 6 aux clients, lesquels peuvent à tout moment redéfinir leurs degrés de collaboration.

Le contrôleur 6 SDN de la couche 4 Cloud assure la formation et la maintenance de la couche réseau virtuel.

Le choix de la technologie SDN réside dans sa capacité de fournir une couche d'abstraction réseau et accélérer son déploiement.

Les équipements des utilisateurs se contentent d'implémenter des règles de traitement données injectées par le contrôleur.

Ainsi, côté utilisateurs, les équipements ne nécessitent pas la mise en oeuvre de protocoles de routage.

Les utilisateurs ont aussi besoin de l'application déployée dans le Cloud qui sert de référence globale et offre une disponibilité de données en cas d'absence dans les Fog.

*Exemple de mise en oeuvre*

Recensement, par le contrôleur SDN, des utilisateurs à faible mobilité relative ou statiques et leurs paramètres

Chaque utilisateur de la communauté qui est statique à une faible mobilité relative envoie périodiquement au contrôleur SDN (via sa connexion internet) son identifiant, sa position GPS, et plusieurs paramètres techniques comme la vitesse, le degré de connectivité avec les autres terminaux, la couverture radio, la qualité de connexion du terminal au réseau de proximité multi-sauts dynamique (qualité de connexion WiFi par exemple), sa qualité de connexion cellulaire (3G/4G/5G, etc.), sa capacité de stockage, son niveau d'énergie de batterie disponible, voire l'e-reputation ou autre information de la personne titulaire du terminal caractéristique des réseaux sociaux.

## Construction d'un réseau virtuel par le contrôleur SDN

En fonction des informations envoyées par les utilisateurs de la communauté, le contrôleur SDN construit d'abord un graphe de connexion où chaque noeud représente un utilisateur et il existe une arête entre deux utilisateurs si la distance entre eux est inférieure au rayon de la couverture WiFi.

En se basant sur le graphe résultant, le serveur de contrôle (contrôleur 6) met en oeuvre l'algorithme **décrit ci**-après pour déterminer un sous-ensemble optimal de noeuds dominants et connectés entre eux pour former le réseau de coeur (FoG) (« Virtual Backbone » ou noeuds formant la colonne vertébrale du réseau - correspond aux noeuds « noirs » par la suite).

Le reste des noeuds forme le réseau d'accès (relais) (correspond aux noeuds « blancs » par la suite).

Un ou plusieurs de ces noeuds (dominants ou dominés à sont aussi sélectionnés comme des passerelles pour assurer la connectivité avec le Cloud.

## Renseignement de la configuration de chaque utilisateur

Après avoir déterminé le rôle de chaque utilisateur, le contrôleur SDN informe chaque utilisateur de son rôle (relais F et/ou noeud de Fog F et/ou passerelle P et de sa configuration (adresse IP, fréquence utilisée, ...)

Un manager SDN installé sur les terminaux 5 des utilisateurs permet la mise en oeuvre de la configuration.

## Gestion de stockage de données dans le Fog

Les données hébergées dans les noeuds F de Fog peuvent provenir aussi bien du Cloud que des utilisateurs finaux.

Dans le premier cas, le Cloud partage explicitement avec le Fog des données relatives à la géolocalisation de ce dernier. En d'autres termes le Cloud sera réparti sur plusieurs Fogs. Bien évidemment, cette opération est conditionnée par la capacité de stockage des Fogs.

Dans le second cas, les requêtes les plus souvent demandées ainsi que les signalements des clients sont aussi stockés dans le Fog.

Dans le premier cas, comme dans le second, une table de hachage distribuée (DHT) est utilisée pour géolocaliser les noeuds du Fog possédant les données.

## Maintenances du réseau Fog

Afin de détecter des changements dans la topologie (graphe), les terminaux doivent envoyer périodiquement leurs positions ainsi que leurs paramètres au contrôleur 6 (voir liste déjà donnée ci-dessus à titre d'exemple).

Lorsque le contrôleur SDN 6 détecte l'arrivée et/ou le départ des terminaux à faible mobilité relative, il relance la reconstruction du Fog.

## Exemples de Services proposés

Comme déjà indiqué, les services et informations partagées auxquels les utilisateurs peuvent avoir accès peuvent être de différents types :

- Aide à la navigation / géolocalisation en temps réel,
- Info Trafic / sécurité routière (signalisation des incidents sur la route et de la présence de zones à risques ou encore de la présence de radars ou de la police sur le bord de la route, etc...),
- Echanges de contenus multimédias,
- Téléchargement de nouvelles applications mobiles,
- Partage de toutes sortes de données (musique, places de parking disponibles, promotions dans un magasin, IdO, ...)
- Etc.....

*Algorithme de construction du réseau virtuel - Généralités*

On notera que l'on connaît déjà, notamment par

- Cheng et al, 2004, CHENG, Xiuzhen, DING, Min, et CHEN, Dechang. An approximation algorithm for connected dominating set in ad hoc networks. In Proc. of International Workshop on Theoretical Aspects of Wireless Ad Hoc, Sensor, and Peer-to-Peer Networks (TAWN). 2004.
- (Theoleyre et Valois, 2006) THEOLEYRE, Fabrice et VALOIS, Fabrice. Auto-organisation de réseaux ad hoc: concepts et impacts. 2006.

des algorithmes de construction de réseaux ad hoc dont la taille se veut minimisée.

Ces algorithmes ne prennent toutefois aucunement en considération la mobilité ou d'autres paramètres techniques comme le débit, la batterie, la couverture d'une zone d'intérêt, la capacité de stockage, la e-réputation, etc. Ils pourraient difficilement être utilisés dans le cas de réseaux de terminaux et dans les applications du type de celles envisagées dans la mesure où chaque terminal exécute lui-même l'algorithme, ce qui réduit largement le débit et la batterie.

L'algorithme de sélection des noeuds du réseau virtuel qui est décrit ci-après a l'avantage de pouvoir prendre en compte les zones d'intérêt.

Il sélectionne les noeuds dominants qui serviront de noeuds pour le réseau virtuel sur la base d'une fonction objective sous plusieurs contraintes sur les paramètres techniques définis par l'application.

La fonction objective est la minimisation du nombre de noeuds.

Une contrainte obligatoire est constituée par le fait de former un CDS, c'est-à-dire un sous-ensemble connexe de sommets de graphes constitués par des noeuds dominants tels que tous les autres noeuds ont au moins un voisin dominant.

Des contraintes supplémentaires sur les paramètres techniques de l'algorithme peuvent être considérées selon les applications. Elles peuvent par exemple être les suivantes :

- les noeuds sélectionnés doivent couvrir un seuil minimum de la surface des zones d'intérêts ;
- les noeuds sélectionnés doivent avoir un seuil minimum de niveau de batterie ;
- les noeuds sélectionnés doivent avoir un seuil minimum de capacité de stockage ;
- les noeuds sélectionnés doivent avoir un seuil minimum de débit ;
- et plus généralement toutes devant être optimisée par le groupe des noeuds sélectionnés et relatives à un ou plusieurs paramètres techniques des terminaux (typiquement des scores peuvent être calculés sur ces paramètres et comparés à des seuils.

Le score est une valeur d'une métrique mixte qui regroupe un ou plusieurs paramètres techniques ; afin de mélanger les paramètres techniques dans une seule valeur (nommée score), elles doivent subir une transformation pour être représentées dans le même domaine (par exemple dans l'intervalle 0-1). De plus, ces paramètres techniques n'ont pas le même degré d'importance/priorité. Par conséquent, chaque paramètre technique possède un coefficient qui exprime cette importance ou différence par rapport aux autres).

Le score est la valeur du ou des paramètres techniques qui évolue au cours de l'exécution de l'algorithme. Il est utilisé dans la détermination des noeuds dominants dits noirs ; une fois que ces noeuds noirs sont fixés leur score n'a plus d'importance, on passe à la détermination d'autres noeuds noirs avec le calcul du score de ces derniers.

En cas d'utilisation de plusieurs paramètres techniques, un ordre de priorité est défini entre eux. Les noeuds sont sélectionnés pour optimiser le paramètre le plus prioritaire et satisfaire les contraintes sur les autres paramètres. En cas où plusieurs noeuds candidats ont les mêmes valeurs d'un paramètre technique, la sélection se fera par le paramètre technique suivant en termes de priorité, et ainsi de suite... Par ailleurs, les paramètres techniques (excepté la couverture géographique) peuvent être classés, grâce aux calculs de score), par tranche d'intervalles pour maximiser le choix et éviter de sélectionner tous les noeuds comme noeuds dominants.

Exemples de classes :

- Batterie : 3 niveaux : M (pour « Medium »), H (pour « High »), L (pour « Low »)
- Réputations réseaux sociaux : 3 niveaux : M (pour « Medium »), H (pour « High »), L (pour « Low »).

L'algorithme tient compte avantageusement de zones d'intérêt.

Terminologie

Dans ce qui suit, on utilisera la terminologie suivante

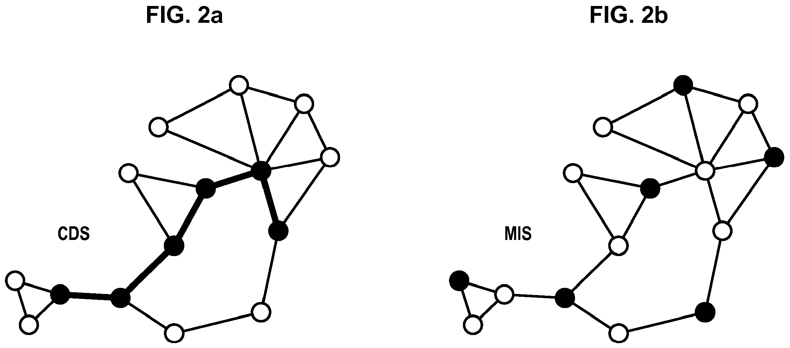

◦ CDS ou « Connected Dominating Set » selon la terminologie anglosaxonne : Sous-ensemble connexe de sommets du graphe constituant des noeuds dits dominants, tels que tous les autres noeuds du graphe (dits non dominants) ont au moins un voisin dominant ; c'est ce qu'illustre la figure 2a, avec les sommets constitués des noeuds noirs ;
◦ IS ou « Indépendant Set » selon la terminologie anglosaxonne : un IS est un sous ensemble de noeuds qui ne sont pas voisins dans le graphe ;
◦ MIS ou « Maximum Independant Set » est le sous-ensemble IS qui a le plus de noeuds. Le MIS est utilisé dans les réseaux ad hoc pour la construction des CDS ; il est illustré sur la figure 2b par les noeuds noirs.

Conventions de couleurs

Les noeuds du réseau sont associés à des codes couleurs qui associent les différents noeuds à différents statuts.
Par convention,

- les noeuds dominants seront associés à la couleur noire,
- les noeuds dominés seront associés à la couleur blanche,
- les noeuds associés à des étapes intermédiaires seront dits de couleur grise (remplissage du noeud par des points sur les figures)
- les noeuds MIS (« Maximal Independent Set », c'est-à-dire le sous-ensemble des noeuds du graphe qui ne sont pas voisins dans le graphe et qui a le plus de noeuds) seront dits de couleur rouge (noeuds hachurés horizontalement sur les figures),
- l'algorithme fait également appel à des noeuds dits jaunes (noeuds hachurés verticalement sur les figures).

· Phase 1 :

Sur la figure 3a et les figures suivantes, on a illustré une configuration de graphe initial comportant deux noeuds (référencés de 1 à 10) représentant des terminaux statiques ou à faible mobilité.
Par convention, les noeuds d'un graphe de départ sont tous considérés comme « dominés » (noeuds de couleur blanche).
Dans une première variante de mise en oeuvre, on élimine tous les noeuds possédants un score qui ne respecte pas l'une des contraintes.
Egalement, si la contrainte supplémentaire de couverture des zones d'intérêt (ZIs) est exigée, on partitionne le graphe en sous-graphes selon l'appartenance des noeuds aux ZI.
Sur la figure 3a, on a identifié deux zones d'intérêt, l'une ZI1 dont font partie les noeuds 3 et 5, l'autre ZI2 dont font partie les noeuds 9 et 10.
Comme l'illustre la figure 3b, il en résulte deux sous graphes : celui que constitue les deux noeuds 3 et 5 reliés l'un à l'autre, et celui que constituent les noeuds qui ne sont ni dans ZI1, ni dans ZI2 et qui sont également reliés l'un à l'autre (noeuds 1,2, 4 et 6 à 8).
Les noeuds 9 et 10 sont quant à eux indépendants l'un de l'autre et ne font partie d'aucun sous-graph identifiable.
Pour chaque sous-graphe, le contrôleur calcule le MIS de celui-ci de la manière suivante :

- il colore le noeud qui a le plus petit identifiant en rouge ;
- il colore ses voisins à un saut en gris et ses voisins à deux sauts en jaune (noeud 4 sur la figure 3b) ;
- puis, tant qu'il reste des noeuds jaunes :

  - il colore le noeud jaune qui a le plus petit identifiant en rouge ;
  - il colore ses voisins blancs/jaunes à un saut en gris et ses voisins blancs à deux sauts en jaune.

A l'issue de la phase 1 les noeuds sont de couleur rouge ou grise (figure 3b. Les noeuds en rouge forment le MIS.

· Phase 2 :

À l'état initial tous les noeuds sont rouge ou gris.
Pour chaque sous-graphe, le contrôleur 6 met en oeuvre le traitement suivant :

a) Calculer pour chaque noeud le score de chaque paramètre technique ainsi que le poids dudit noeud ; le poids d'un noeud est en particulier égal à la somme du nombre de ses voisins de couleur rouge (auxquels il est lié dans le graphe ou sous-graphe) et du nombre de ses voisins de couleurs noirs (auxquels il est lié dans le graphe ou sous-graphe) à laquelle on retranche 1 ; le poids est une métrique composée et il est basé sur les valeurs des paramètres techniques qui sont : le degré de connectivité des noeuds rouges et le nombre des composantes des noeuds dominants (noeuds noir).

Cette métrique permet de départager les noeuds lorsqu'ils ont la même valeur du score.

On notera qu'un tel poids a été présenté dans l'article de Cheng et al. (2004) auquel on pourra avantageusement se référer.

b) Eliminer tous les noeuds avec un score qui ne respecte pas l'une des contraintes ;
c) Tant qu'il reste des noeuds gris/rouge avec tous les scores supérieurs aux seuils exigés :

1) Colorer le noeud qui a le score le plus élevé de la contrainte la plus prioritaire (casser l'égalité par les scores suivants selon l'ordre puis le poids ensuite l'identifiant) en noir ;
2) Colorer ses voisins non-noir en blanc.

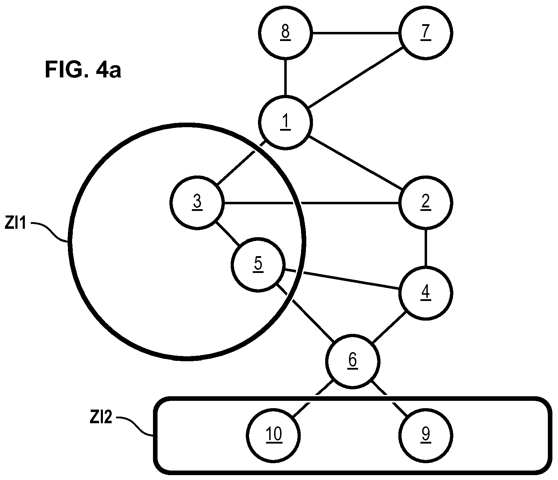

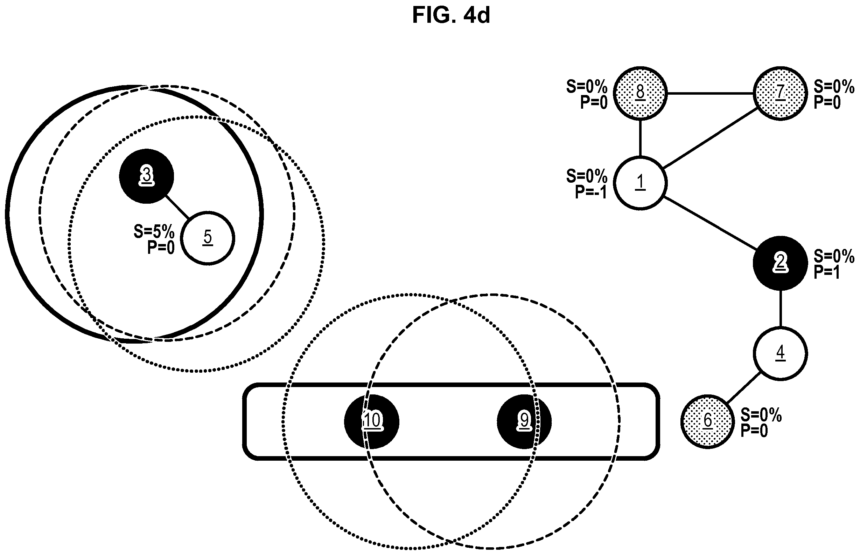

Dans l'exemple illustré sur la figure 4a, on cherche à maximiser la métrique de couverture dans chaque sous-graphe, les noeuds de chaque ZI devant couvrir par exemple plus de 70% des zones d'intérêt.

Le score de couverture est indiqué sur la figure par la variable S.

Le noeud 3 est initialement d'un score de 80% et d'un poids de -1 tandis que le noeud 5 est d'un score de 40% et d'un poids de 0.

Le noeud 3 est donc basculé en noir tandis que le noeud 5 est coloré en blanc.

De la même façon, les noeuds 9 et 10 ont initialement le même score S pour la contrainte de couverture (60%) et le même poids P (de valeur -1). L'un des deux est choisi pour basculer en noir (celui de plus grand identifiant).

Egalement, les scores des noeuds du sous-graphe de droite sont tous égaux à 0% (puisqu'ils ne sont pas dans les zones d'intérêt), tandis que les poids des noeuds 6, 7 et 8 sont égaux à 0, et ceux des noeuds 1 et 4 sont égaux à -1. Le poids du noeud 2 est quant à lui égal à 1. Le noeud 2 est donc coloré en noir, les noeuds 1 et 4 étant colorés en blanc, les noeuds 6, 7 et 8 restant quant à eux en gris.

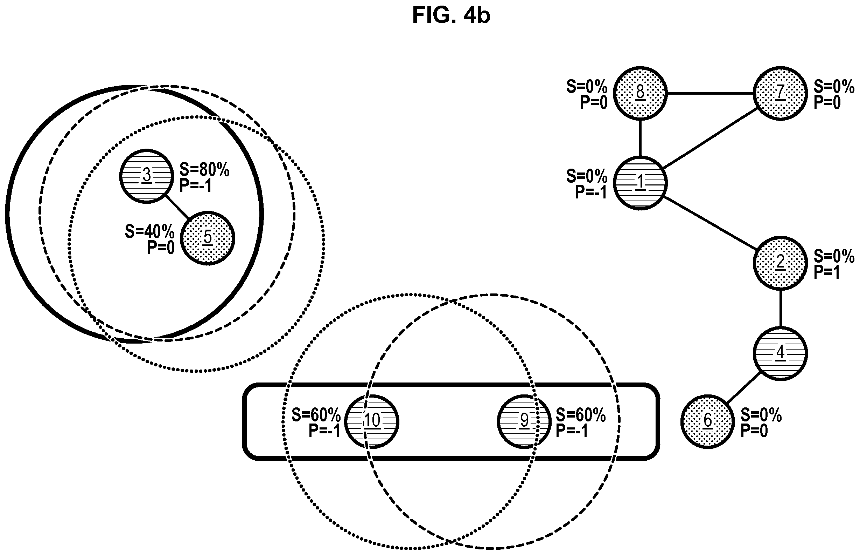

A l'issue de ce premier traitement, les statuts sont ceux indiqués sur la figure 4b.

On notera que seuls 5% de la zone d'intérêt ZI1 pourraient encore être couverts par le noeud 5, le reste étant soit non couvert par les noeuds 3 ou 5, soit déjà couvert par le noeud 3.

Le noeud 5 a alors un poids égal à 0.

Le noeud 10 pourrait quant à lui encore couvrir 30% complémentaires de la zone $ZI_2$. Son poids est égal à -1.

Les noeuds 6 à 8 sont de poids égal à 0, tandis que les noeuds 1 et 4 sont de poids égal à -1, et le noeud 2 est de poids égal à 1.

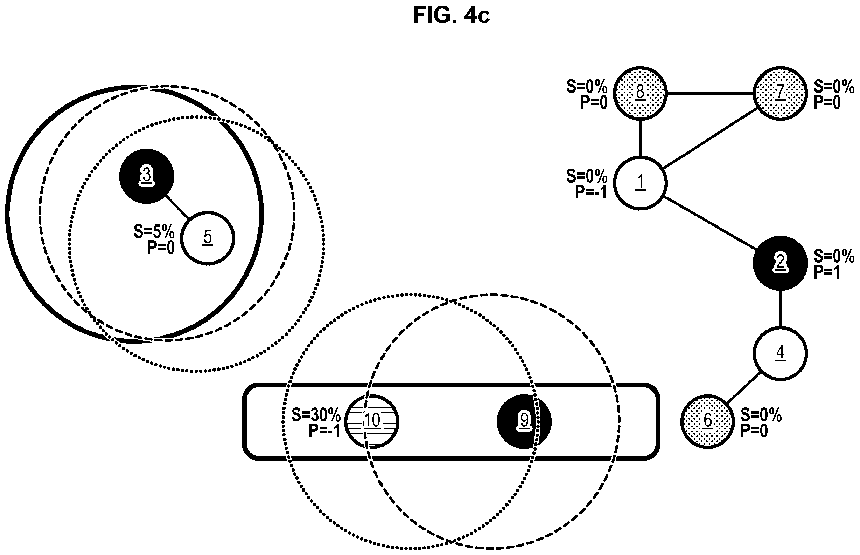

Pour permettre d'atteindre les 70% de couverture de la zone $ZI_2$, le noeud 10 est basculé dans un statut correspondant à la couleur noire (noeud dominant) (figure 4c).

Les autres noeuds sont inchangés étant donné que la contrainte sur la zone $ZI_1$ est déjà respectée et que les autres noeuds n'interviennent pas dans le respect de la contrainte de couverture des zones d'intérêt.

A titre d'exemple et de façon non limitative, il peut être pris un calcul de score en considérant les zones d'intérêt comme étant circulaire et la couverture radio des noeuds comme étant circulaire ; il peut être ainsi étudié le chevauchement des cercles et déduit les noeuds dominants.

Il est ensuite réalisé la réinitialisation de la couverture radio des zones d'intérêt ZI pour déterminer d'autres noeuds dominants supplémentaires si nécessaire pour assurer le seuil de couverture radio pour la zone d'intérêt ZI.

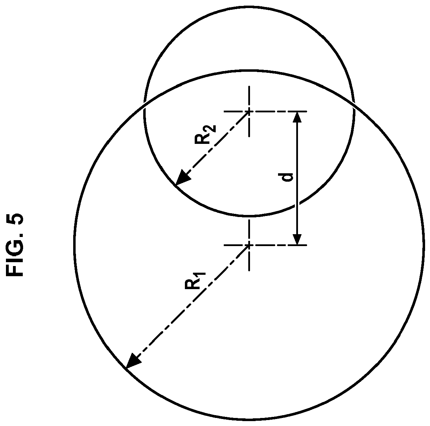

Dans l'exemple illustré sur la figure 5, la zone d'intérêt ZI est représentée par un cercle de rayon $R_k$, tandis que le cercle C de rayon Ri représente la couverture radio autour du noeud i. La distance entre les centres des deux cercles a été référencée par d. L'aire de la lentille asymétrique d'intersection entre les deux cercles est donnée par

$$\text{Area}(i, k) = R_k^2 \sin^{-1}\left(\frac{a}{2R_k}\right) - \sqrt{s_k(s_k - a)(s_k - R_k)^2} +$$
$$R_i^2 \sin^{-1}\left(\frac{a}{2R_i}\right) - \sqrt{s_i(s_i - a)(s_i - R_i)^2}, \tag{1}$$

$$a \;=\; \frac{1}{d}\sqrt{(-d + R_k + R_i)(d - R_k + R_i)(d + R_k - R_i)}$$
$$\times \sqrt{(d + R_k + R_i)}$$

avec

$$s_k \;=\; \frac{a + 2R_k}{2} \qquad s_i \;=\; \frac{a + 2R_i}{2}$$

Le score $score_i^k$ assigné au noeud i dans la zone d'intérêt ZI est donné par la formule suivante :

$$\mathrm{score}_i^k = \frac{\mathrm{Area}(i,k)}{\mathrm{Area}(k)}. \qquad\qquad (2)$$

Lorsqu'un noeud i ayant le score le plus élevé dans la zone d'intérêt ZI k est sélectionné comme dominant, les scores de tous les noeuds j non dominants dans la même zone d'intérêt sont mis à jour par zone de chevauchement commun de trois cercles (i,j,k). Plus particulièrement, pour un noeud j non dominant dans la zone d'intérêt ZI k, son score mis à jour est donné selon la formule suivante :

$$\mathrm{score}_j^k = \mathrm{score}_j^k - \frac{\mathrm{Area}(i,j,k)}{\mathrm{Area}(k)}. \qquad\qquad (3)$$

. Phase 3.a :

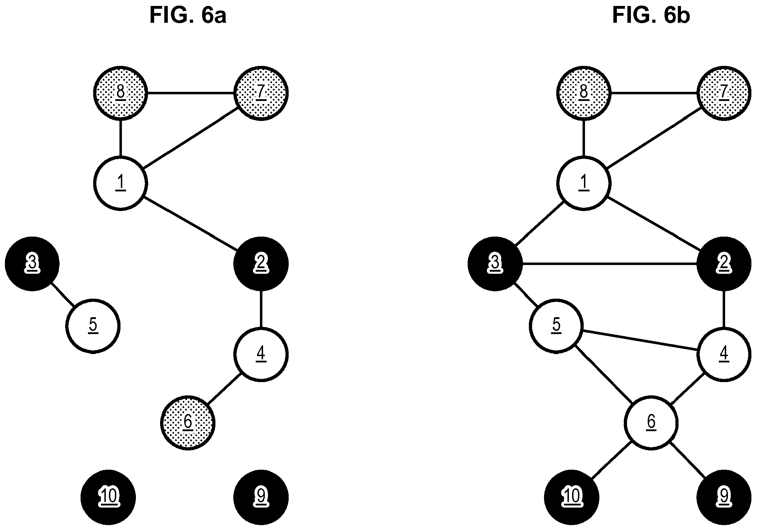

A l'issue du traitement de la phase 2, le contrôleur 6 remet les sous-graphes précédents dans un seul graphe.
Pour tout noeud gris/rouge qui devient voisin d'un noeud noir, il colore ce noeud en blanc.
Dans l'exemple illustré sur les figures 6a et 6b, le noeud 6 devient blanc (statut de noeud dominé).

· Phase 3.b :

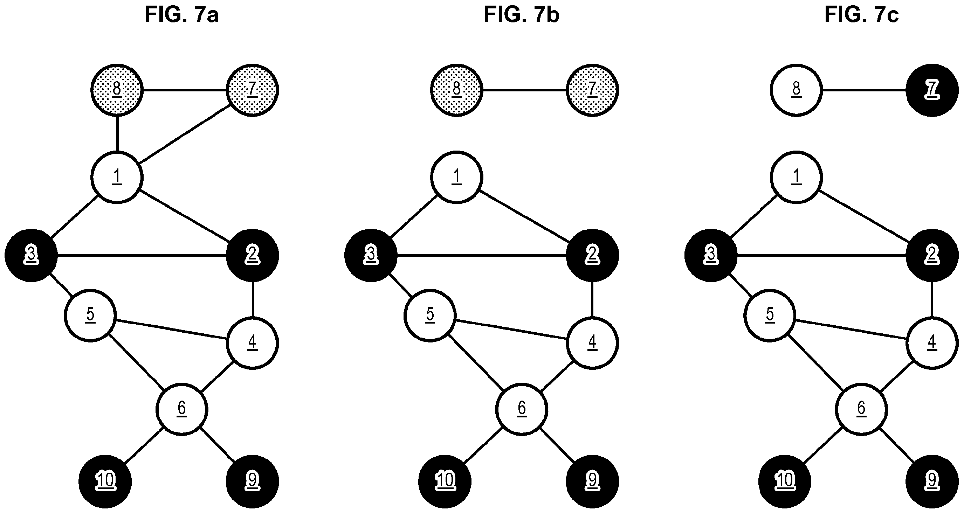

Dans cette phase, le contrôleur 6 crée les sous-graphes avec les noeuds gris restants.
C'est ce qui est illustré par les figures 7a à 7c dans lesquelles les noeuds 7 et 8 sont isolés dans un nouveau sous-graphe.
Le cas échéant, il colore le noeud rouge/blanc voisin de l'un des noeuds gris restants et le plus proche d'une composante noire en noir ; il colore également ses voisins en blanc.
Puis, pour chaque sous-graphe, il met en oeuvre les étapes suivantes :

a) Colorer le noeud gris qui a le plus de voisins gris en noir ;
b) Colorer ses voisins en blanc ;
c) Tant qu'il reste des noeuds gris :

1) Colorer le noeud blanc qui a le plus de voisins gris en noir ;
2) Colorer ses voisins en blanc.

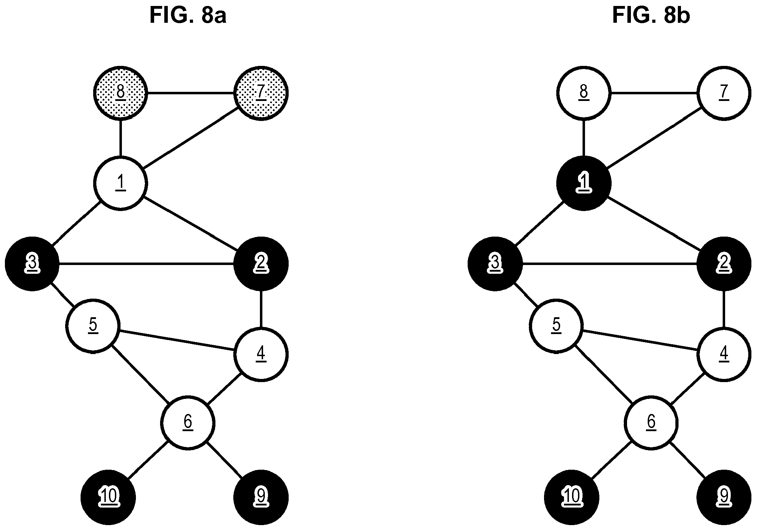

Sur la figure 7c, le noeud 7 présentant l'identifiant le moins élevé est basculé en statut dominant et coloré en noir, tandis que le noeud 8 est basculé en statut dominé et coloré en blanc.
En variante, on peut directement mettre en oeuvre sur le graphe de départ le traitement des étapes (a), (b), (c). C'est ce qu'illustre les figures 8a et 8b sur lesquelles le noeud 1 qui comporte les deux voisins gris 7 et 8 est basculé à l'état dominant (coloré en noir), tandis que les noeuds 7 et 8 prennent l'état dominé (colorés en blanc).

· Phase 3.c :

Lors de cette phase, le contrôleur 6 met en oeuvre les étapes suivantes :

a) Restituer le graphe entier ;
b) Pour chaque noeud rouge restant :

1) Colorer ce noeud en noir s'il a un voisin noir après l'étape 3.b.

• Phase 4 :

Tant qu'il reste des noeuds blancs :

a) Colorer un à deux noeuds blancs (le minimum possible), à condition qu'ils ne respectent pas les contraintes, en noirs pour connecter des composantes noires.

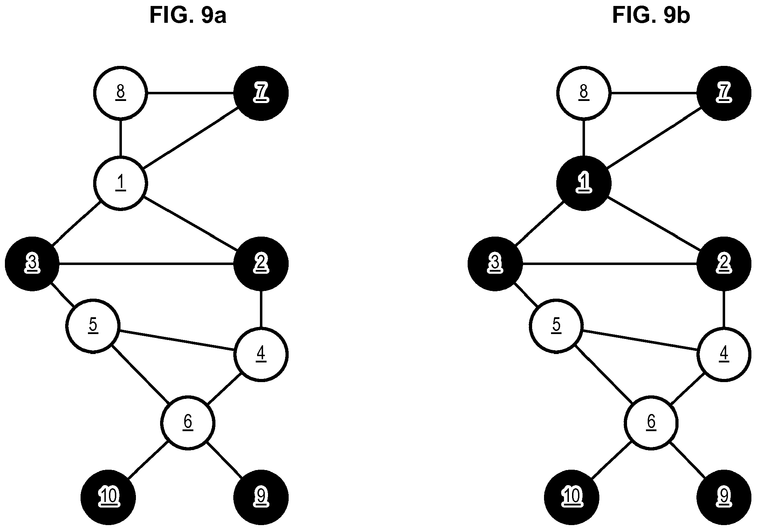

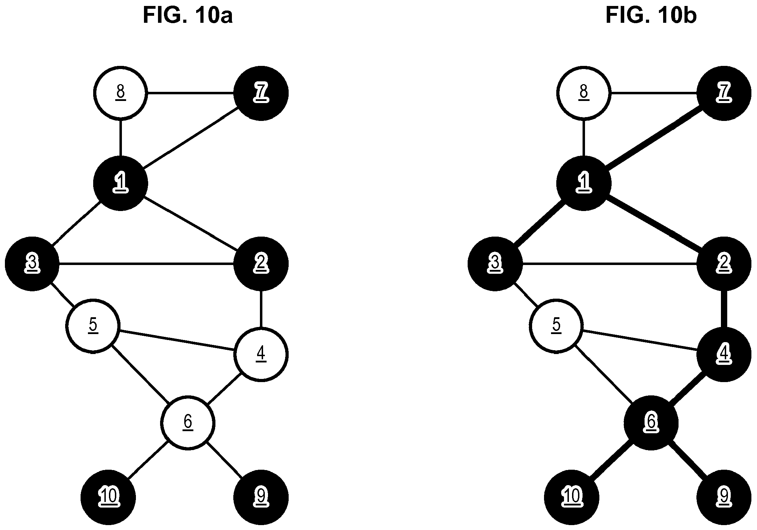

C'est ce qui est illustré sur les figures 9a, 9b et 10a, 10b pour lesquelles le noeud 1 et les noeuds 4 et 6 sont basculés à l'état dominant (colorés en noir).

A la fin du traitement, il reste un réseau choeur de noeuds dominants qui sont alors utilisés comme colonne vertébrale pour le réseau virtuel de communication de proximité multi-sauts à architecture dynamique.

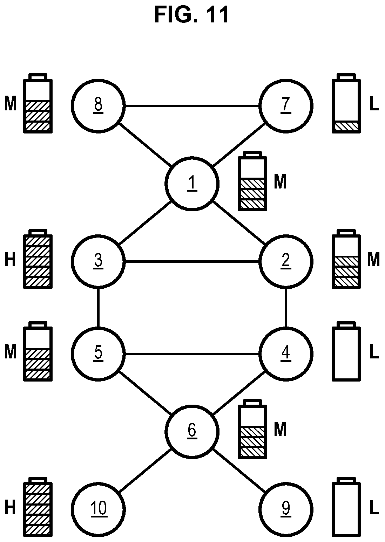

Un autre exemple est illustré à partir de la figure 11 avec le cas d'une contrainte sur le niveau de charge de la batterie.

Dans l'exemple illustré, le graphe comporte 10 noeuds qui sont soit à un niveau de charge bas (noeuds 4, 7 et 9 au niveau L), soit à un niveau de charge médian (noeuds 1, 2, 5, 6, 8), soit à un niveau de charge haut (noeuds 3 et 10 au niveau H).

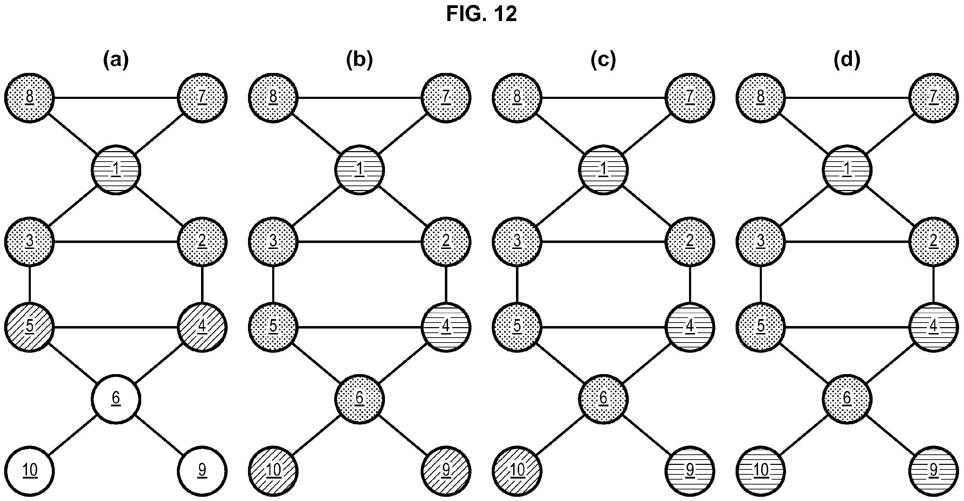

La contrainte est de former un réseau avec les niveaux de charge de batterie supérieur au niveau médian M. Les figures 12a à12d montrent les différentes étapes de formation du MIS. Les noeuds 1, 4, 9 et 10 sont basculés en rouge à l'issue de cette première phase, tandis que les autres noeuds sont en gris.

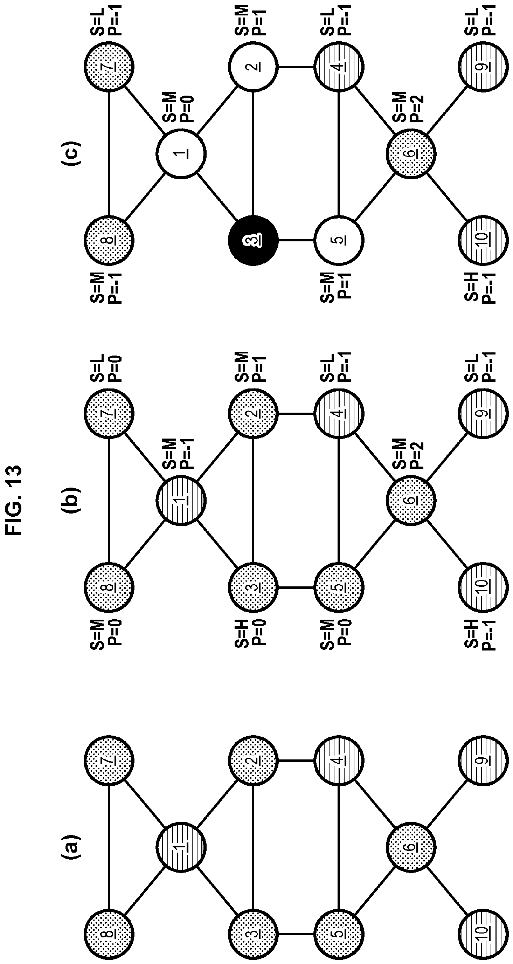

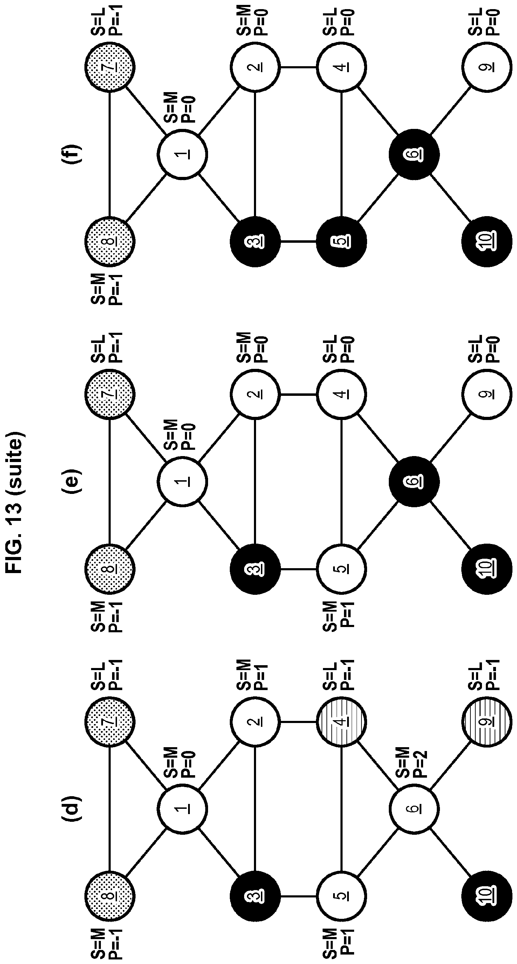

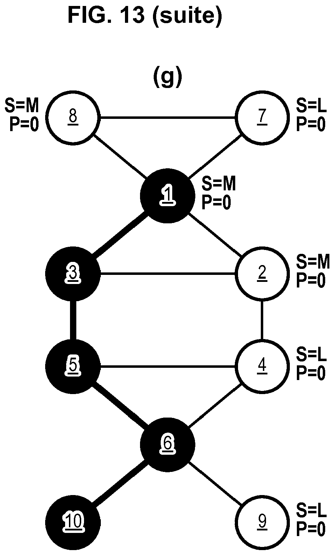

Dans une deuxième phase (figures 13a à 13g), le contrôleur 6 calcule le mDS à partir des niveaux de batterie et des poids des noeuds. Le résultat en est la structure mDS illustrée sur la figure 13g.

Etant donné qu'à l'issue de cette phase, aucun noeud n'est dans un statut gris, les phases 3 et 4 n'ont pas à être mises en oeuvre.

Les noeuds noirs constituent un réseau de noeuds dominants qui sont alors utilisés comme colonne vertébrale pour le réseau virtuel de communication de proximité multi-sauts à architecture dynamique.

Bien entendu, plusieurs contraintes pourraient être associées pour la détermination du réseau Fog, par exemple la couverture à plus de 70% de chaque zone d'intérêt et un niveau de charge de batterie pour chaque noeud supérieur au niveau médian, ou plus généralement toute autre contrainte qui pourrait être jugée utile.

Pour la mise en oeuvre du procédé décrit précédemment, les contraintes peuvent être hiérarchisées par zones d'intérêt.

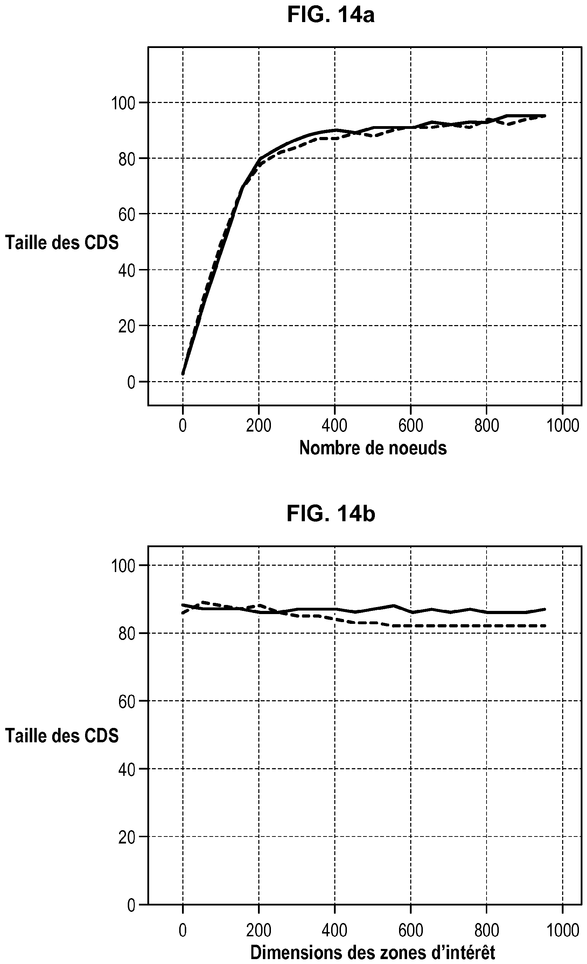

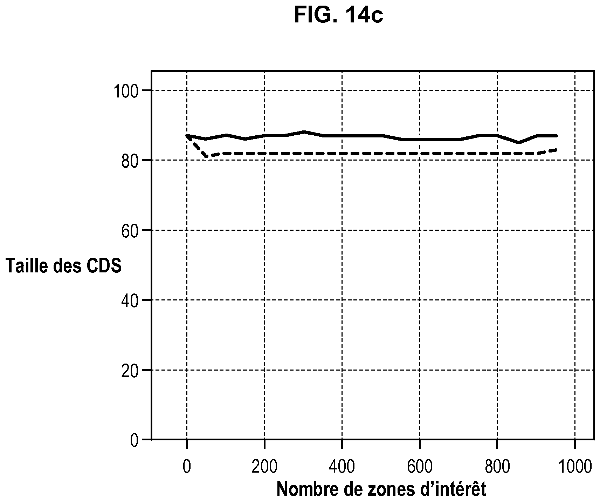

Les figures 14a, 14b et 14c donnent des résultats de dimensions de réseaux Fog obtenus en fonction du nombre de noeuds de départ (figure 14a), en fonction des dimensions de zones d'intérêt à couvrir (figure 14b) ou encore en fonction du nombre de zones d'intérêt à couvrir (figure 14c).

Les résultats obtenus dans le cas du procédé proposé (courbes B) et dans le cas de l'algorithme Cheng (courbes C) sont similaires si l'on ne s'intéresse qu'au nombre de noeuds de départ (figure 14a) ; le procédé proposé permet toutefois un gain en termes de noeuds utilisés pour la constitution du réseau CDS en raison des variantes de l'étape 3b illustrées sur des figures 8a et 8b et de celle de la phase 1 dans laquelle on élimine tous les noeuds possédants un score qui ne respecte pas l'une des contraintes.

Ce gain est d'autant plus surprenant que le fait de considérer plus de paramètres techniques que Cheng conduirait a priori à constituer plus de noeuds pour le réseau, mais qui est plus que compensé par les variantes proposées par les inventeurs.

Ce gain est d'autant plus grand qu'il est pris des zones d'intérêt de dimensions importantes (figure 14b) ou nombreuses (figure 14c).

## Revendications

1. Procédé de communication entre des terminaux utilisateurs finaux (5) et des terminaux utilisateurs statiques ou à faible mobilité (5A) relative les uns par rapport aux autres,

ces terminaux (5, 5A) étant adaptés pour mettre en oeuvre entre eux, par une première liaison de communication qui est une liaison de communication sans fil, des communications sans fil de proximité lorsqu'ils sont à des distances le permettant, ainsi qu'à communiquer individuellement, par une deuxième liaison de communication qui est une liaison de communication cellulaire, avec au moins un serveur des ressources à distance qui est un serveur de contrôle accessible par un réseau de type « Cloud Computing »
dans lequel :

- les terminaux utilisateurs statiques ou à faible mobilité relative (5A) forment ensemble les noeuds d'un réseau de communication de proximité multi-sauts à architecture dynamique et échangent entre eux dans ce réseau par leur première liaison de communication sans fil,
ces terminaux utilisateurs statiques ou à faible mobilité relative (5A) du réseau de proximité multi-sauts échangeant avec au moins le serveur de contrôle (6) qui supervise l'architecture dudit réseau de proximité multi-sauts,
- et les autres terminaux utilisateurs étant les terminaux utilisateurs finaux (5) et communiquant avec au moins l'un des terminaux utilisateurs statiques ou à faible mobilité relative (5A) du réseau par la première liaison de communication sans fil,

procédé qui comprend les étapes suivantes :

- chaque terminal (5, 5A) transmet par la deuxième liaison de communication cellulaire au/aux serveur/serveurs de contrôle (6), des informations de contrôle telles qu'une information d'identification et de positionnement, ainsi qu'une information relative à au moins un paramètre technique,

**caractérisé en ce qu'** en fonction des informations de contrôle reçues, le serveur de contrôle (6) :

• sélectionne les terminaux statiques ou à faible mobilité relative (5A) parmi l'ensemble des terminaux, les autres terminaux étant dits terminaux finaux (5),
• détermine un graphe dont les noeuds sont les terminaux statiques ou à faible mobilité relative (5A), deux noeuds étant reliés par une arête si la distance entre eux est inférieure à la distance leur permettant d'échanger directement entre eux par le réseau de proximité multi-sauts dynamique,
• détermine sur ce graphe de noeuds un sous-graphe de noeuds dominants (F), la détermination de ce sous-graphe étant optimisée pour minimiser le nombre de noeuds et respecter une contrainte donnée sur au moins un paramètre technique donné,
• sélectionne dans le sous-graphe des noeuds dominants (F) au moins un noeud passerelle (P) apte à établir une communication avec le réseau de type « Cloud Computing » par leur deuxième liaison de communication cellulaire,
• sélectionne les noeuds du graphe (R) qui n'appartiennent pas aux noeuds du sous-graphe, comme noeuds ayant uniquement la fonction d'accès/relais au réseau de proximité multi-sauts dynamique pour les terminaux utilisateurs finaux (5),
• transmet par la deuxième liaison de communication cellulaire uniquement individuellement à chacun des différents terminaux statiques ou à faible mobilité relative (5A) son statut hiérarchique : de noeud passerelle (P), de noeud dominant (F) ou de simple noeud d'accès/relais (R) qui leur est attribué, pour constituer le réseau de proximité multi-sauts dynamique de communication pendant une durée fonction de la configuration en cours des terminaux statiques ou à faible mobilité relative (5A).

2. Procédé selon la revendication 1 dans lequel, une fois le réseau de proximité multi-sauts dynamique de communication constitué, lorsqu'un terminal utilisateur final (5) ou un terminal utilisateur statique ou à faible mobilité relative (5A) émet une requête, ce terminal (5, 5A) émet :

• dans un premier temps par sa première liaison de communication sans fil au réseau de proximité multi-sauts de communication, les noeuds dominants (F) étant aptes à gérer ladite requête pour répondre au terminal qui les interrogent,
• dans un second temps, sans réponse satisfaisante des noeuds dominants (F),
au serveur de contrôle (6),
soit directement par sa deuxième liaison de communication cellulaire,
soit par l'intermédiaire d'un autre terminal qui est un noeud passerelle, en communication avec le serveur de contrôle (6) par la deuxième liaison de communication cellulaire de cet autre terminal.

3. Procédé selon l'une des revendications 1 à 2, dans lequel le serveur de contrôle (6) subdivise le graphe en plusieurs zones géographiques d'intérêt (ZI, ZI1, ZI2) pour lesquelles un ou plusieurs paramètres techniques sont définis, et calcule le réseau de proximité multi-sauts dynamique de communication qui présente des terminaux statiques ou à faible mobilité relative (5A) dans ces zones géographiques d'intérêt (ZI, ZI1, ZI2).

4.  Procédé selon l'une des revendications 1 à 3, dans lequel le serveur de contrôle (6) tient compte de plusieurs paramètres techniques et définit un ordre de priorité de ces paramètres techniques.

5.  Procédé selon la revendication précédente 3 et la revendication 4, dans lequel le serveur de contrôle (6) définit un ordre de priorité dans chaque zone géographique d'intérêt (ZI, ZI1, ZI2).

6.  Procédé selon l'une des revendications précédentes, dans lequel le ou les paramètres techniques transmis par un terminal au serveur de contrôle (6) sont choisis parmi la liste suivante :

    - degré de connectivité avec les autres terminaux ;
    - couverture radio ;
    - qualité de connexion ;
    - capacité mémoire pour le stockage des données ;
    - niveau d'énergie de batterie disponible ;
    - vitesse du terminal ;
    - qualité de la connexion du terminal au réseau de proximité multi-sauts dynamique ;
    - e-reputation ou autre information de la personne titulaire du terminal caractéristique des réseaux sociaux.

7.  Procédé selon l'une des revendications 1 à 6, dans lequel la contrainte technique est définie par :

    - un seuil, notamment lorsque le paramètre technique est la couverture radio ; ou
    - deux à quatre classes d'intervalles pour un paramètre technique, notamment lorsque le paramètre technique est la capacité mémoire pour le stockage des données ou le niveau d'énergie de batterie disponible.

8.  Procédé selon la revendication 7, dans lequel la contrainte technique est définie pour un seuil de couverture radio dans une zone d'intérêt (ZI, ZI1, ZI2) et dans lequel

    - on prend deux paramètres techniques : le degré de connectivité et la couverture radio qui a un ordre de priorité inférieur à celui du degré de connectivité ;
    - on calcule le chevauchement de la couverture radio des noeuds avec la ou les zones géographiques d'intérêt (ZI, ZI1, ZI2), on retient les noeuds ayant la plus grande couverture radio dans la ou les zones géographiques d'intérêt (ZI, ZI1, ZI2) comme noeuds dominants (F), et on réinitialise la surface des zones d'intérêt ZI à couvrir hors couvertures radio des noeuds dominants (F) déterminés, pour trouver d'autres noeuds dominants (F) supplémentaires si nécessaire pour couvrir la zone d'intérêt (ZI, ZI1, ZI2).

9.  Procédé selon l'une des revendications précédentes, dans lequel des données sont hébergées dans les noeuds dominants (F) du réseau de proximité multi-sauts dynamique de communication, et proviennent du réseau de type Cloud Computing, du serveur de contrôle (6) et/ou des terminaux, les noeuds dominants (F) pouvant communiquer et partager entre eux les données.

10. Procédé selon l'une des revendications précédentes, dans lequel la portée en extérieure des communications pour la première liaison de communication sans fil est inférieure à 300 mètres, et pour la deuxième liaison de communication cellulaire supérieure à 400 mètres.

11. Procédé selon l'une des revendications précédentes, dans lequel les terminaux sont configurés avec des interfaces de communication Wifi et/ou Bluetooth et/ou Zigbee et/ou V2X et/ou C-V2X, DSRC pour leur première liaison sans fil, ainsi qu'avec des interfaces de communication 2G et/ou 3G et/ou 4G et/ou LTE et/ou 5G pour leur deuxième liaison de communication cellulaire, le serveur de contrôle (6) étant conforme au modèle SDN, chaque terminal présentant une unité de contrôle correspondante.

12. Procédé selon l'une des revendications précédentes, dans lequel lorsque le serveur de contrôle (6) détecte l'arrivée et/ou le départ de terminaux statiques ou à faible mobilité relative (5A), il relance la détermination des statuts des noeuds de réseau constitués par les terminaux statiques ou à faible mobilité relative (5A).

13. Procédé selon l'une des revendications précédentes, dans lequel pour la détermination du sous-graphe qui comporte une ou des zones géographiques d'intérêts (ZI, ZI1, ZI2), le serveur de contrôle (6) met en oeuvre 4 étapes successives :

- dans une première étape, former un Maximum Independent Set, MIS, dans le graphe, et de façon indépendante dans la ou les zones géographiques d'intérêts (ZI, ZI1, ZI2) du sous graphe si le graphe comporte une ou plusieurs zones géographiques d'intérêts (ZI, ZI1, ZI2) ;
- dans une deuxième étape, former un Minimum Dominating Set, mDS, en :

- (i) calculant les scores du ou des paramètres techniques pour chaque noeud du graphe, pour obtenir des premiers noeuds dominants (F),
ces scores satisfaisant la contrainte sur le ou les paramètres techniques pour les noeuds dominants (F),
- (ii) mettant à jour les scores du ou des paramètres techniques,
- (iii) déterminant d'autres seconds noeuds dominants (F) en plus des premiers noeuds dominants (F), en relançant la phase (i) et la phase (ii) jusqu'à ce que la contrainte ne soit pas satisfaite pour les noeuds restants ;

- dans une troisième étape, mise à jour des noeuds restants en noeuds dominés sur le graphe entier pour lequel toutes les zones d'intérêt (ZI, ZI1, ZI2) ont été réunies ; et mise à jour des scores du ou des paramètres techniques, et détermination d'autres noeuds dominants (F) à partir des noeuds dominés ;
- dans une quatrième étape, interconnecter les noeuds dominants (F) entre eux pour former un Minimum Connected Dominating Set, mCDS.

14. Procédé selon la revendication précédente, dans lequel le serveur de contrôle (6) élimine préalablement dans la première étape les noeuds qui ne respectent pas la classe d'intervalle souhaitée pour la contrainte technique donnée sur le paramètre technique donné.

15. Procédé selon la revendication précédente, dans lequel le serveur de contrôle (6) transforme des noeuds dominés en noeuds dominants (F) dans la troisième phase après la réunion de toutes les zones d'intérêt (ZI, ZI1, ZI2) pour former le graphe en entier.

16. Ensemble comprenant des terminaux utilisateurs finaux (5), des terminaux utilisateurs statiques ou à faible mobilité relative (5A), et au moins un serveur des ressources à distance qui est un serveur de contrôle accessible par un réseau de type « Cloud Computing »,

ces terminaux (5, 5A) étant configurés pour mettre en oeuvre entre eux, par une première liaison de communication qui est une liaison de communication sans fil, des communications sans fil de proximité lorsqu'ils sont à des distances le permettant, ainsi qu'à communiquer individuellement, par une deuxième liaison de communication qui est une liaison de communication cellulaire, avec le serveur de contrôle
dans lequel :

- les terminaux utilisateurs statiques ou à faible mobilité relative (5A) forment ensemble les noeuds d'un réseau de communication de proximité multi-sauts à architecture dynamique et échangent entre eux dans ce réseau par leur première liaison de communication sans fil,
ces terminaux utilisateurs statiques ou à faible mobilité relative (5A) du réseau de proximité multi-sauts échangeant avec au moins le serveur de contrôle (6) qui supervise l'architecture dudit réseau de proximité multi-sauts,
- et les autres terminaux utilisateurs étant les terminaux utilisateurs finaux (5) et communiquant avec au moins l'un des terminaux utilisateurs statiques ou à faible mobilité relative (5A) du réseau par la première liaison de communication sans fil,
- chaque terminal (5, 5A) étant configuré pour transmettre par la deuxième liaison de communication cellulaire au/aux serveur/serveurs de contrôle (6), des informations de contrôle telles qu'une information d'identification et de positionnement, ainsi qu'une information relative à au moins un paramètre technique,

**caractérisé en ce que**, le serveur de contrôle (6) est configuré pour en fonction des informations de contrôle reçues:

• sélectionner les terminaux statiques ou à faible mobilité relative (5A) parmi l'ensemble des terminaux, les autres terminaux étant dits terminaux finaux (5),
• déterminer un graphe dont les noeuds sont les terminaux statiques ou à faible mobilité relative (5A), deux noeuds étant reliés par une arête si la distance entre eux est inférieure à la distance leur permettant d'échanger directement entre eux par le réseau de proximité multi-sauts dynamique,
• déterminer sur ce graphe de noeuds un sous-graphe de noeuds dominants (F), la détermination de ce sous-graphe étant optimisée pour minimiser le nombre de noeuds et respecter une contrainte donnée sur au moins un paramètre technique donné,
• sélectionner dans le sous-graphe des noeuds dominants (F) au moins un noeud passerelle (P) apte à établir une communication avec le réseau de type Cloud Computing par leur deuxième liaison de communication cellulaire,
• sélectionner les noeuds du graphe (R) qui n'appartiennent pas aux noeuds du sous-graphe, comme noeuds ayant uniquement la fonction d'accès/relais au réseau de proximité multi-sauts dynamique pour les terminaux utilisateurs finaux (5),
• transmettre par la deuxième liaison de communication cellulaire uniquement individuellement à chacun des différents terminaux statiques ou à faible mobilité relative (5A) son statut hiérarchique : de noeud passerelle (P), de noeud dominant (F) ou de simple noeud d'accès/relais (R) qui leur est attribué, pour constituer le réseau de proximité multi-sauts dynamique de communication pendant une durée fonction de la configuration en cours des terminaux statiques ou à faible mobilité relative (5A).

**Patentansprüche**

1. Verfahren zur Kommunikation zwischen finalen Benutzerendgeräten (5) und statischen oder relativ zueinander wenig mobilen Benutzerendgeräten (5A),

   wobei diese Benutzerendgeräte (5, 5A) geeignet sind, untereinander über eine erste Kommunikationsverbindung, die eine drahtlose Kommunikationsverbindung ist, drahtlose Nahbereichskommunikation zu implementieren, wenn sie sich in Entfernungen befinden, die dies erlauben, sowie individuell über eine zweite Kommunikationsverbindung, die eine zellulare Kommunikationsverbindung ist, mit mindestens einem Server der Fernressourcen zu kommunizieren, der ein Kontrollserver ist, der über ein Netz vom Typ "Cloud Computing" zugänglich ist.
   in dem :

   - die statischen oder relativ zueinander wenig mobilen Benutzerendgeräte (5A) zusammen die Knoten eines mehrspringenden Nahkommunikationsnetzes mit dynamischer Architektur bilden und sich in diesem Netz über ihre erste drahtlose Kommunikationsverbindung untereinander austauschen,
   wobei diese statischen oder relativ zueinander wenig mobilen Benutzerendgeräte (5A) des Multi-Hop-Nahbereichsnetzes sich mit mindestens dem Kontrollserver (6) austauschen, der die Architektur des Multi-Hop-Nahbereichsnetzes beaufsichtigt,
   - und die anderen Benutzerendgeräte die finale Benutzerendgeräte (5) sind und mit mindestens einem der statischen oder relativ zueinander wenig mobilen Benutzerendgeräte (5A) des Netzwerks über die erste drahtlose Kommunikationsverbindung kommunizieren,

   wobei das Verfahren die folgenden Schritte umfasst:

   - jedes Benutzerendgerät (5, 5A) überträgt über die zweite zellulare Kommunikationsverbindung an den/die Kontrollserver/-server (6) Kontrollinformationen wie Identifikations- und Positionsinformationen sowie Informationen bezüglich mindestens eines technischen Parameters,

   **dadurch gekennzeichnet, dass** der Kontrollserver (6) in Abhängigkeit von den empfangenen Kontrollinformationen :

   - die statischen oder relativ zueinander wenig mobilen Benutzerendgeräte (5A) aus der Gesamtheit der Benutzerendgeräte auswählt, wobei die anderen Benutzerendgeräte als Endgeräte (5) bezeichnet werden,
   - bestimmt einen Graphen, dessen Knoten die statischen oder relativ zueinander wenig mobilen Benutzerendgeräte (5A) sind, wobei zwei Knoten durch eine Kante verbunden sind, wenn der Abstand zwischen ihnen kleiner ist als der Abstand, der es ihnen ermöglicht, sich über das dynamische Multi-Hop-Nahbereichsnetz direkt untereinander auszutauschen,
   - bestimmt auf diesem Knotengraphen einen Untergraphen der dominanten Knoten (F), wobei die Bestimmung dieses Untergraphen optimiert ist, um die Anzahl der Knoten zu minimieren und eine gegebene Beschränkung auf mindestens einen gegebenen technischen Parameter einzuhalten,

- aus dem Untergraphen der dominanten Knoten (F) mindestens einen Gateway-Knoten (P) auswählt, der geeignet ist, über ihre zweite zellulare Kommunikationsverbindung eine Kommunikation mit dem Netzwerk vom Typ "Cloud Computing" aufzubauen,

- wählt die Knoten des Graphen (R), die nicht zu den Knoten des Subgraphen gehören, als Knoten aus, die nur die Funktion des Zugriffs/Relays auf das dynamische Multi-Hop-Nahbereichsnetz für die finalen Benutzerendgeräte (5) haben,

- über die zweite zellulare Kommunikationsverbindung nur individuell an jedes der verschiedenen statischen oder relativ wenig mobilen Endgeräte (5A) seinen hierarchischen Status überträgt: als Gateway-Knoten (P), als dominanter Knoten (F) oder als einfacher Zugangs-/Relay-Knoten (R), der ihnen zugewiesen ist, um das dynamische Multi-Hop-Nahbereichsnetz für die Kommunikation für eine Dauer zu bilden, die von der aktuellen Konfiguration der statischen oder relativ wenig mobilen Endgeräte (5A) abhängt.

2. Verfahren nach Anspruch 1, bei dem, sobald das dynamische Multi-Hop-Nahbereichsnetz für die Kommunikation aufgebaut ist, wenn ein finales Benutzerendgerät (5) oder ein statisches Benutzerendgerät oder ein Benutzerterminal mit geringer relativer Mobilität (5A) eine Anforderung sendet, dieses Terminal (5, 5A) Folgendes sendet:

- in einer ersten Phase über seine erste drahtlose Kommunikationsverbindung an das Mehrsprung-Nahbereichsnetz der Kommunikation, wobei die dominanten Knoten (F) in der Lage sind, die Anfrage zu verwalten, um dem Endgerät, das sie befragt, zu antworten,

- in einer zweiten Phase, ohne zufriedenstellende Antwort der dominanten Knoten (F),
an den Kontrollserver (6),
entweder direkt über seine zweite zellulare Kommunikationsverbindung,
oder über ein anderes Endgerät, das ein Gateway-Knoten ist, der mit dem Kontrollserver (6) über die zweite zelluläre Kommunikationsverbindung dieses anderen Endgeräts in Verbindung steht.

3. Verfahren nach einem der Ansprüche 1 bis 2, wobei der Kontrollserver (6) den Graphen in mehrere geografische Interessengebiete (ZI, ZI1, ZI2) unterteilt, für die ein oder mehrere technische Parameter definiert sind, und das dynamische Multi-Hop-Nahbereichsnetz der Kommunikation berechnet, das statische Endgeräte oder Endgeräte mit geringer relativer Mobilität (5A) in diesen geografischen Interessengebieten (ZI, ZI1, ZI2) aufweist.

4. Verfahren nach einem der Ansprüche 1 bis 3, wobei der Kontrollserver (6) mehrere technische Parameter berücksichtigt und eine Rangfolge dieser technischen Parameter festlegt.

5. Verfahren nach dem vorhergehenden Anspruch 3 und Anspruch 4, wobei der Kontrollserver (6) eine Prioritätsreihenfolge in jedem geografischen Interessengebiet (ZI, ZI1, ZI2) festlegt.

6. Verfahren nach einem der vorhergehenden Ansprüche, wobei der oder die technischen Parameter, die von einem Endgerät an den Kontrollserver (6) übertragen werden, aus der folgenden Liste ausgewählt werden:

- Grad der Konnektivität mit anderen Endgeräten ;
- Funkabdeckung ;
- Verbindungsqualität;
- Speicherkapazität für die Speicherung von Daten ;
- Niveau der verfügbaren Batterieenergie ;
- Geschwindigkeit des Endgeräts ;
- Qualität der Verbindung des Endgeräts mit dem dynamischen Multi-Hop-Nahbereichsnetz ;
- E-Reputation oder andere Informationen der Person, die das Terminal besitzt, die für soziale Netzwerke charakteristisch ist.

7. Verfahren nach einem der Ansprüche 1 bis 6, bei dem die technische Einschränkung definiert ist durch :

- einem Schwellenwert, insbesondere wenn der technische Parameter die Funkabdeckung ist; oder
- zwei bis vier Intervallklassen für einen technischen Parameter, insbesondere wenn der technische Parameter die Speicherkapazität für die Datenspeicherung oder die verfügbare Batterieenergie ist.

8. Verfahren nach Anspruch 7, bei dem die technische Einschränkung für einen Schwellenwert der Funkabdeckung in einem Interessengebiet (ZI, ZI1, ZI2) definiert wird und bei dem

- man zwei technische Parameter nimmt: den Grad der Konnektivität und die Funkabdeckung, die eine niedrigere Prioritätsreihenfolge als der Grad der Konnektivität hat;
- die Überlappung der Funkabdeckung der Knoten mit dem/den geografischen Interessengebiet(en) (ZI, ZI1, ZI2) berechnet wird, die Knoten mit der größten Funkabdeckung in dem/den geografischen Interessensgebiet(en) (ZI, ZI1, ZI2) als dominante Knoten (F) festgehalten werden, und die Fläche der abzudeckenden Interessengebiete ZI außerhalb der Funkabdeckung der bestimmten dominanten Knoten (F) zurückgesetzt wird, um weitere zusätzliche dominante Knoten (F) zu finden, falls dies zur Abdeckung des Interessengebiets (ZI, ZI1, ZI2) erforderlich ist.

9. Verfahren nach einem der vorhergehenden Ansprüche, wobei Daten in den dominanten Knoten (F) des dynamischen Multi-Hop-Nahbereichsnetzes zur Kommunikation gehostet werden und aus dem Cloud Computing-Netzwerk, dem Kontrollserver (6) und/oder den Endgeräten stammen, wobei die dominanten Knoten (F) miteinander kommunizieren und die Daten untereinander teilen können.

10. Verfahren nach einem der vorhergehenden Ansprüche, wobei die Außenreichweite der Kommunikation für die erste drahtlose Kommunikationsverbindung weniger als 300 Meter und für die zweite zellulare Kommunikationsverbindung mehr als 400 Meter beträgt.

11. Verfahren nach einem der vorhergehenden Ansprüche, wobei die Endgeräte mit Wifi und/oder Bluetooth und/oder Zigbee und/oder V2X und/oder C-V2X, DSRC Kommunikationsschnittstellen für ihre erste drahtlose Kommunikationsverbindung sowie mit 2G und/oder 3G und/oder 4G und/oder LTE und/oder 5G Kommunikationsschnittstellen für ihre zweite zellulare Kommunikationsverbindung konfiguriert sind, wobei der Kontrollserver (6) dem SDN-Modell entspricht, wobei jedes Endgerät eine entsprechende Kontrolleinheit aufweist.

12. Verfahren nach einem der vorhergehenden Ansprüche, wobei der Kontrollserver (6), wenn er die Ankunft und/oder Abreise von statischen oder relativ zueinander wenig mobilen Benutzerendgeräten (5A) erfasst, die Bestimmung des Status der durch die statischen oder relativ wenig mobilen Endgeräte (5A) gebildeten Netzknoten neu startet.

13. Verfahren nach einem der vorhergehenden Ansprüche, bei dem der Kontrollserver (6) zur Bestimmung des Subgraphen, der eine oder mehrere geografische Interessengebiete (ZI, ZI1, ZI2) enthält, 4 aufeinanderfolgende Schritte durchführt:

- in einem ersten Schritt Bilden eines Maximum Independent Set, MIS, in dem Graphen und unabhängig davon in der/den geografischen Interessenzone(n) (ZI, ZI1, ZI2) des Subgraphen, wenn der Graph eine oder mehrere geografische Interessengebiete (ZI, ZI1, ZI2) enthält;
- in einem zweiten Schritt Bilden eines Minimum Dominating Set, mDS, durch :

   - (i) Berechnen der Punktzahlen des oder der technischen Parameter für jeden Knoten des Graphen, um erste dominante Knoten (F) zu erhalten,
   wobei diese Scores die Beschränkung auf den oder die technischen Parameter für die dominanten Knoten (F) erfüllen,
   - (ii) Aktualisieren der Punktzahlen des technischen Parameters oder der technischen Parameter,
   - (iii) Bestimmen weiterer zweiter dominanter Knoten (F) zusätzlich zu den ersten dominanten Knoten (F) durch erneutes Ausführen von Schritt (i) und Schritt (ii), bis die Einschränkung für die verbleibenden Knoten nicht erfüllt ist;

   - in einem dritten Schritt, Aktualisieren der verbleibenden Knoten zu dominierten Knoten auf dem gesamten Graphen, für den alle Bereiche von Interesse (ZI, ZI1, ZI2) zusammengefasst wurden; und Aktualisieren der Punktzahlen des technischen Parameters oder der technischen Parameter, und Bestimmen weiterer dominanter Knoten (F) aus den dominierten Knoten ;
   - in einem vierten Schritt, Zusammenschalten der dominanten Knoten (F) untereinander, um ein Minimum Connected Dominating Set, mCDS, zu bilden.

14. Verfahren nach dem vorhergehenden Anspruch, wobei der Kontrollserver (6) zuvor im ersten Schritt die Knoten eliminiert, die die gewünschte Intervallklasse für die gegebene technische Beschränkung auf den gegebenen technischen Parameter nicht einhalten.

15. Verfahren nach dem vorhergehenden Anspruch, wobei der Kontrollserver (6) in der dritten Phase nach der Zusammenführung aller Interessengebiete (ZI, ZI1, ZI2) zur Bildung des gesamten Graphen dominierte Knoten in dominante Knoten (F) umwandelt.

16. Set mit finalen Benutzerendgeräten (5), statischen oder relativ zueinander wenig mobilen Benutzerendgeräten (5A) und mindestens einem Server für Fernressourcen, der ein Kontrollserver ist, auf den über ein Netzwerk vom Typ "Cloud Computing" zugegriffen werden kann,

wobei diese Benutzerendgeräte (5, 5A) so konfiguriert sind, dass sie untereinander über eine erste Kommunikationsverbindung, die eine drahtlose Kommunikationsverbindung ist, eine drahtlose Nahbereichskommunikation durchführen, wenn sie sich in Entfernungen befinden, die dies erlauben, sowie individuell über eine zweite Kommunikationsverbindung, die eine zellulare Kommunikationsverbindung ist, mit dem Kontrollserver kommunizieren.
wobei :

- die statischen Benutzerendgeräte oder Endgeräte mit geringer relativer Mobilität (5A) zusammen die Knoten eines Mehrsprung-Nahkommunikationsnetzes mit dynamischer Architektur bilden und sich in diesem Netz über ihre erste drahtlose Kommunikationsverbindung untereinander austauschen, wobei diese statischen oder relativ zueinander wenig mobilen Benutzerendgeräten (5A) des Multi-Hop-Nahbereichsnetzes mit mindestens dem Kontrollserver (6), der die Architektur des Multi-Hop-Nahbereichsnetzes überwacht, im Austausch stehen,
- und die anderen Benutzerendgeräte die Endbenutzerendgeräte (5) sind und mit mindestens einem der statischen oder relativ zueinander wenig mobilen Benutzerendgeräten (5A) des Netzwerks über die erste drahtlose Kommunikationsverbindung kommunizieren,
- wobei jedes Endgerät (5, 5A) so konfiguriert ist, dass es über die zweite zellulare Kommunikationsverbindung an den/die Kontrollserver/-server (6) Kontrollinformationen wie Identifikations- und Positionsinformationen sowie Informationen bezüglich mindestens eines technischen Parameters sendet,

**dadurch gekennzeichnet, dass** der Kontrollserver (6) so konfiguriert ist, dass er in Abhängigkeit von den empfangenen Kontrollinformationen:

- die statischen oder relativ zueinander wenig mobilen Benutzerendgeräten (5A) aus der Gesamtheit der Endgeräte auszuwählen, wobei die anderen Endgeräte als Endgeräte (5) bezeichnet werden,
- einen Graphen bestimmen, dessen Knoten die statischen oder relativ zueinander wenig mobilen Benutzerendgeräten (5A) sind, wobei zwei Knoten durch eine Kante verbunden sind, wenn der Abstand zwischen ihnen kleiner ist als der Abstand, der es ihnen erlaubt, direkt miteinander über das dynamische Multi-Hop-Nahbereichsnetz zu kommunizieren,
- auf diesem Knotengraphen einen Subgraphen der dominanten Knoten (F) bestimmen, wobei die Bestimmung dieses Subgraphen optimiert ist, um die Anzahl der Knoten zu minimieren und eine gegebene Einschränkung in Bezug auf mindestens einen gegebenen technischen Parameter einzuhalten,
- Auswählen mindestens eines Gateway-Knotens (P) aus dem Subgraphen der dominanten Knoten (F), der geeignet ist, eine Kommunikation mit dem Cloud-Computing-Netzwerk über ihre zweite zellulare Kommunikationsverbindung herzustellen,
- die Knoten des Graphen (R), die nicht zu den Knoten des Subgraphen gehören, als Knoten auszuwählen, die nur die Funktion des Zugriffs/Relays auf das dynamische Multi-Hop-Nahbereichsnetz für die Endbenutzerendgeräte (5) haben,
- über die zweite zellulare Kommunikationsverbindung nur individuell an jedes der verschiedenen statischen oder relativ zueinander wenig mobilen Benutzerendgeräten (5A) seinen hierarchischen Status zu übertragen: als Gateway-Knoten (P), als dominanter Knoten (F) oder als einfacher Zugangs-/Relay-Knoten (R), der ihnen zugewiesen ist, um das dynamische Multi-Hop-Nahbereichsnetz für die Kommunikation für eine Dauer zu bilden, die von der aktuellen Konfiguration der statischen oder relativ zueinander wenig mobilen Benutzerendgeräten (5A) abhängt.

**Claims**

1. A method of communication between end user terminals (5) and user terminals (5A) being static or of low mobility relative to each other,

these terminals (5, 5A) being adapted to implement proximity wireless communications between them, via a first communication link which is a wireless communication link, when they are at distances allowing this, as well as to communicate individually, via a second communication link which is a cellular communication link, with at least one remote resource server which is a control server accessible via a Cloud Computing type network in which :

- the static or low-relative-mobility user terminals (5A) together form the nodes of a dynamically-architected multi-hop proximity communication network, and communicate with each other in this network via their first wireless communication link,

these static or low-relative-mobility user terminals (5A) of the multi-hop proximity network exchanging with at least the control server (6) which supervises the architecture of said multi-hop proximity network, and the other user terminals being the end user terminals (5) and communicating with at least one of the static or low-relative-mobility user terminals (5A) of the network via the first wireless communication link, the method comprising the following steps:

- each terminal (5, 5A) transmits control information, such as identification and positioning information, and information relating to at least one technical parameter, to the control server(s) (6) via the second cellular communication link,

**characterized in that**, depending on the control information received, the control server (6):

- selects static or low-relative-mobility terminals (5A) from the set of terminals, the other terminals being referred to as end terminals (5),
- determines a graph whose nodes are the static or low-relative-mobility terminals (5A), two nodes being linked by an edge if the distance between them is less than the distance enabling them to exchange directly with each other via the dynamic multi-hop proximity network,
- determines a sub-graph of dominant nodes (F) on this graph of nodes, the determination of this sub-graph being optimized to minimize the number of nodes and to respect a given constraint on at least one given technical parameter,
- selects from the sub-graph of dominant nodes (F) at least one gateway node (P) capable of establishing communication with the cloud computing network via their second cellular communication link,
- selects the graph nodes (R) that do not belong to the sub-graph nodes, as nodes with the sole function of accessing/relaying the dynamic multi-hop proximity network for end-user terminals (5),
- transmits via the second cellular communication link only individually to each of the various static or low-relative-mobility terminals (5A) its hierarchical status: gateway node (P), dominant node (F) or simple access/relay node (R) assigned to them, to form the dynamic multi-hop proximity communication network for a period of time depending on the current configuration of the static or low-relative-mobility terminals (5A).

2. Method according to claim 1 in which, once the dynamic multi-hop proximity communication network has been constituted, when an end user terminal (5) or a static or low relative mobility user terminal (5A) transmits a request, this terminal (5, 5A) transmits:

- in a first stage, via its first wireless communication link to the multi-hop proximity communication network, the dominant nodes (F) being able to manage said request to respond to the terminal that interrogates them,
- in a second stage, without a satisfactory response from the dominant nodes (F),
to the control server (6),
either directly via its second cellular communication link,
or via another terminal which is a gateway node, in communication with the control server (6) via this other terminal's second cellular communication link.

3. Method according to one of claims 1 to 2, in which the control server (6) subdivides the graph into several geographical zones of interest (ZI, ZI1, ZI2) for which one or more technical parameters are defined, and calculates the dynamic multi-hop proximity communication network which has static or low-relative-mobility terminals (5A) in these geographical zones of interest (ZI, ZI1, ZI2).

4. Method according to one of claims 1 to 3, wherein the control server (6) takes into account several technical parameters and defines an order of priority of these technical parameters.

**5.** Method according to the preceding claim 3 and claim 4, in which the control server (6) defines an order of priority in each geographical zone of interest (ZI, ZI1, ZI2).

**6.** Method according to one of the preceding claims, in which the technical parameter or the technical parameters transmitted by a terminal to the control server (6) is/are chosen from the following list:

- degree of connectivity with other terminals;
- radio coverage ;
- connection quality;
- memory capacity for data storage;
- available battery power level;
- terminal speed ;
- quality of the terminal's connection to the dynamic multi-hop proximity network;
- e-reputation or other information about the terminal owner characteristic of social networks.

**7.** Method according to one of claims 1 to 6, in which the technical constraint is defined by:

- a threshold, in particular when the technical parameter is radio coverage; or
- two to four interval classes for a technical parameter, in particular when the technical parameter is memory capacity for data storage or the available battery energy level.

**8.** Method according to claim 7, in which the technical constraint is defined for a radio coverage threshold in an area of interest (ZI, ZI1, ZI2) and in which

- two technical parameters are taken: the degree of connectivity and the radio coverage, which has a lower order of priority than the degree of connectivity;
- we calculate the overlap of the radio coverage of the nodes with the geographical area(s) of interest (ZI, ZI1, ZI2), we retain the nodes with the greatest radio coverage in the geographical area(s) of interest (ZI, ZI1, ZI2) as dominant nodes (F), and we reset the area of the ZI zones of interest to be covered outside the radio coverage of the dominant nodes (F) determined, to find other additional dominant nodes (F) if necessary to cover the zone of interest (ZI, ZI1, ZI2).

**9.** Method according to one of the preceding claims, in which data is hosted in the dominant nodes (F) of the dynamic multi-hop proximity communication network, and originates from the cloud computing network, the control server (6) and/or the terminals, the dominant nodes (F) being able to communicate and share the data with one another.

**10.** Method according to one of the preceding claims, in which the outdoor communication range for the first wireless communication link is less than 300 meters, and for the second cellular communication link greater than 400 meters.

**11.** Method according to one of the preceding claims, in which the terminals are configured with Wifi and/or Bluetooth and/or Zigbee and/or V2X and/or C-V2X, DSRC communication interfaces for their first wireless communication link, and with 2G and/or 3G and/or 4G and/or LTE and/or 5G communication interfaces for their second cellular communication link, the control server (6) conforming to the SDN model, each terminal having a corresponding control unit.

**12.** Method according to one of the preceding claims, in which when the control server (6) detects the arrival and/or departure of static or low-relative-mobility terminals (5A), it restarts the determination of the statuses of the network nodes constituted by the static or low-relative-mobility terminals (5A).

**13.** Method according to one of the preceding claims, in which for the determination of the subgraph which comprises one or more geographical zones of interest (ZI, ZI1, ZI2), the control server (6) implements 4 successive steps:

- in a first step, forming a Maximum Independent Set, MIS, in the graph, and independently in the geographical zone(s) of interest (ZI, ZI1, ZI2) of the sub-graph if the graph comprises one or more geographical zones of interest (ZI, ZI1, ZI2);
- in a second step, form a Minimum Dominating Set, mDS, by:

    - (i) calculating the scores of the technical parameter(s) for each node of the graph, to obtain first dominant nodes (F),
these scores satisfying the constraint on the technical parameter(s) for the dominant nodes (F),
- (ii) updating the scores of the technical parameter(s),
- (iii) determining other second dominant nodes (F) in addition to the first dominant nodes (F), repeating phase (i) and phase (ii) until the constraint is not satisfied for the remaining nodes;

- in a third step, update the remaining nodes to dominated nodes on the entire graph for which all zones of interest (ZI, ZI1, ZI2) have been gathered; and update the scores of the technical parameter(s), and determine further dominant nodes (F) from the dominated nodes;
- in a fourth step, interconnect the dominant nodes (F) with each other to form a Minimum Connected Dominating Set, mCDS.

**14.** A method according to the preceding claim, in which the control server (6) in the first step preliminarily eliminates nodes that do not comply with the desired interval class for the given technical constraint on the given technical parameter.

**15.** Method according to the preceding claim, in which the control server (6) transforms dominated nodes into dominant nodes (F) in the third phase after all the zones of interest (ZI, ZI1, ZI2) have been combined to form the entire graph.

**16.** A set comprising end-user terminals (5), static or low-relative-mobility user terminals (5A), and at least one remote resource server which is a control server accessible via a cloud computing network,

these terminals (5, 5A) being configured to implement proximity wireless communications with each other via a first communication link, which is a wireless communication link, when they are at distances allowing this, and to communicate individually with the control server via a second communication link, which is a cellular communication link.
in which:

- the static or low-relative-mobility user terminals (5A) together form the nodes of a dynamically-architected multi-hop proximity communication network, and communicate with each other in this network via their first wireless communication link,
these static or low-relative-mobility user terminals (5A) of the multi-hop proximity network exchanging with at least the control server (6) which supervises the architecture of said multi-hop proximity network,
- and the other user terminals being the end-user terminals (5) and communicating with at least one of the static or low-relative-mobility user terminals (5A) of the network via the first wireless communication link,
- each terminal (5, 5A) being configured to transmit to the control server(s) (6), via the second cellular communication link, control information such as identification and positioning information, as well as information relating to at least one technical parameter,

**characterized in that**, the control server (6) is configured to according to the received control information:

- select static or low-relative-mobility terminals (5A) from the set of terminals, the other terminals being referred to as end terminals (5),
- determine a graph whose nodes are the static or low-relative-mobility terminals (5A), two nodes being linked by an edge if the distance between them is less than the distance enabling them to exchange directly with each other via the dynamic multi-hop proximity network,
- determine a sub-graph of dominant nodes (F) on this graph of nodes, the determination of this sub-graph being optimized to minimize the number of nodes and respect a given constraint on at least one given technical parameter,
- select from the sub-graph of dominant nodes (F) at least one gateway node (P) able to establish communication with the cloud computing network via their second cellular communication link,
- select graph nodes (R) that do not belong to the sub-graph nodes, as nodes with the sole function of accessing/relaying the dynamic multi-hop proximity network for end-user terminals (5),
- transmit by the second cellular communication link only individually to each of the various static or low-relative-mobility terminals (5A) its hierarchical status: gateway node (P), dominant node (F) or simple access/relay node (R) assigned to them, to form the dynamic multi-hop proximity communication network for a period of time depending on the current configuration of the static or low-relative-mobility terminals (5A).

**FIG. 1a**

FIG. 1b

FIG. 2a

FIG. 2b

CDS

MIS

EP 3 721 656 B1

FIG. 3c

FIG. 3b

FIG. 3a

FIG. 4a

Zl1

Zl2

FIG. 4b

S=0%
P=0

S=0%
P=0

S=0%
P=-1

S=0%
P=1

S=80%
P=-1

S=40%
P=0

S=60%
P=-1

S=60%
P=-1

S=0%
P=0

EP 3 721 656 B1

FIG. 4c

FIG. 4d

EP 3 721 656 B1

FIG. 5

FIG. 6b

FIG. 6a

FIG. 7a

FIG. 7b

FIG. 7c

EP 3 721 656 B1

FIG. 8b

FIG. 8a

FIG. 9b

FIG. 9a

FIG. 10b

FIG. 10a

EP 3 721 656 B1

## FIG. 11

FIG. 12

(a)　　　(b)　　　(c)　　　(d)

EP 3 721 656 B1

FIG. 13

FIG. 13 (suite)

(d)

S=M
P=-1
8 7
S=L
P=-1

1
S=M
P=0

3 2
S=M
P=1

S=M
P=1
5 4
S=L
P=-1

6
S=M
P=2

10 9
S=L
P=-1

(e)

S=M
P=-1
8 7
S=L
P=-1

1
S=M
P=0

3 2
S=M
P=0

S=M
P=1
5 4
S=L
P=0

6

10 9
S=L
P=0

(f)

S=M
P=-1
8 7
S=L
P=-1

1
S=M
P=0

3 2
S=M
P=0

5 4
S=L
P=0

6

10 9
S=L
P=0

EP 3 721 656 B1

## FIG. 13 (suite)

**(g)**

## FIG. 14a

Taille des CDS

Nombre de noeuds

## FIG. 14b

Taille des CDS

Dimensions des zones d'intérêt

## FIG. 14c

**EP 3 721 656 B1**

**RÉFÉRENCES CITÉES DANS LA DESCRIPTION**

**Documents brevets cités dans la description**

- FR 3017017